# EUROPÄISCHE PATENTSCHRIFT

(11) **EP 1 735 136 B1**
(45) Veröffentlichungstag und Bekanntmachung des Hinweises auf die Patenterteilung: **17.12.2014**
(21) Anmeldenummer: 05739505.5
(22) Anmeldetag: 02.04.2005
(51) Int. Cl.: A23L 1/317, B29C 47/88, B29C 47/00, A22C 13/00

(54) **Nahrungsmittelhülle mit einer Porösen Außenschicht, Verfahren zu ihrer Herstellung und ihre Verwendung als Lebensmittelverpackung**
Food casing comprising a porous outer layer, process for its production and its use as food packaging.
Enveloppe pour produits alimentaires pourvue d'une couche extérieur poreuse, procédé pour sa fabrication et son utilisation comme emballage alimentaire.

(30) Priorität: 08.04.2004 DE 102004017350
(43) Veröffentlichungstag der Anmeldung: 27.12.2006
(73) Patentinhaber: Kalle GmbH, 65203 Wiesbaden (DE)
(72) Erfinder: STALBERG, Stefanie, 65232 Taunusstein-Wehen (DE); DELIUS, Ulrich, 60529 Frankfurt (DE); FERON, Bernhard, 65189 Wiesbaden (DE); SCHMIDT, Michael, 65375 Oestrich-Winkel (DE)
(74) Vertreter: Plate, Jürgen
(86) Internationale Anmeldenummer: PCT/EP2005/003484
(87) Internationale Veröffentlichungsnummer: WO 2005/097461

(56) Entgegenhaltungen:
- EP-A2- 0 073 046
- WO-A-02/094023
- WO-A-03/073861
- DE-A1- 19 840 991
- US-A- 2 000 835
- US-A- 4 371 554
- US-A- 5 843 502
- US-B1- 6 589 615
- "REFLEKTOMETER ALS HILFSMITTEL ZUR GLANZBEURTEILUNG AN EBENEN ANSTRICH-UND KUNSTSTOFF-OBERFLAECHEN", DEUTSCHE NORMEN. DIN NORM,, vol. 67530, 1 January 1982 (1982-01-01), pages 377-381, XP009032897,

## Beschreibung

Die Erfindung betrifft eine coextrudierte thermoplastische Nahrungsmittelhülle aufgebaut aus mindestens 2 Schichten einschließlich einer außenliegenden Schicht (Z). Sie betrifft daneben ein Verfahren zur Herstellung der Nahrungsmittelhülle sowie ihre Verwendung als Lebensmittelverpackung.

Nahrungsmittelhüllen, speziell Wursthüllen, werden traditionell aus Naturdarm, Hautfasern, regenerierter Cellulose, die gegebenenfalls mit einer Faserpapiereinlage verstärkt wird, oder aus Textilmaterial hergestellt. Dünne Hautfaserdärme sind essbar und werden auch als Hautfasersaitlinge bezeichnet. Kollagen- und Cellulosedärme haben auf dem Weltmarkt nach wie vor den größten Anteil, insbesondere bei höherwertigen Wurstwaren. An zweiter Stelle folgen die Hüllen aus thermoplastischen Kunststoffen, insbesondere solche aus Polyamid oder aus Polyamid-Polyolefin-Verbundsystemen. Die Mehrzahl der thermoplastischen Hüllen wiederum wird bei der Herstellung streckorientiert, was zu thermischem Schrumpfvermögen und zu besseren mechanischen Eigenschaften führt. Das Aussehen der thermoplastischen Hüllen ist jedoch sehr künstlich. Außerdem sind die thermoplastischen Hüllen üblicherweise so glatt, dass sie den natürlich strukturierten Oberflächen eines Kollagendarms nur wenig ähneln und außerdem gleiten sie beim Füllen leicht aus der Hand.

Hautfaserdärme werden nach einem sehr aufwendigen und umweltbelastenden Verfahren aus Rinderhäuten hergestellt. Das Hautgewebe wird mit Säuren wie Milchsäure bis zu den Fibrillen aufgeschlossen; die hochviskose Masse wird extrudiert und mit gasförmigem Ammoniak oder Ammoniumsulfatlösung langsam und kompakt ausgefällt und verfestigt. Beim Trocknen erfolgt dann eine Vernetzung (Härtung), die den Produkten eine ausreichende Stabilität verleiht, so dass sie den Brühprozess ohne wesentlichen Festigkeitsverlust überstehen. Naturdärme wie auch Hautfaserdärme werden jedoch aufgrund verschiedener Vorfälle wie der BSE-Seuche bei Rindern und dem Missbrauch von Antibiotika von den Endverbrauchern zunehmend weniger akzeptiert. Es drohen außerdem gesetzliche Beschränkungen. Eine Alternative zu den genannten Därmen ist daher wünschenswert. Cellulosedärme, selbst solche mit Faserverstärkung, können diese Aufgabe nur eingeschränkt übernehmen. Ihr Herstellungsverfahren ist nicht weniger aufwendig und umweltschädigend als das Verfahren bei den Hautfaserdärmen.

Ein großer Vorteil der Nahrungsmittelhüllen aus thermoplastischem Kunststoff ist ihre einfache, preiswerte Herstellung. Jedoch hat der Endverbraucher vielfach Vorbehalte gegen Würste in diesen Hüllen. Die naturgemäß stark glänzende Oberfläche des Kunststoffs vermittelt oft den Eindruck eines Produktes geringeren Wertes. Der optische Eindruck ließ sich bisher nur dahingehend verbessern, dass sie matt bedruckt wurden, aber noch nicht so, dass eine natürlich wirkende Imitation eines Hautfaserdarms oder einer faserverstärkten Cellulosehülle gelang. Hinzu kommt die schlechte Griffigkeit der Würste, wenn die Kunststoff-Oberfläche mit Feuchtigkeit oder Fett benetzt ist.

Bei Hüllen aus Naturdarm, aus faserverstärkter Cellulose oder aus Kollagen sorgt die faserige Konsistenz für eine grob strukturierte, rauhe Oberfläche. Der Verbraucher, der diese Optik seit vielen Jahrzehnten kennt, assoziiert damit einen höheren Wert bzw. die traditionelle Herstellung des Wurstproduktes.

Es sind verschiedene Methoden zur Bildung strukturierter Kunststoffoberflächen bekannt, z.B. die Verschäumung von Kunststoffschmelzen innerhalb eines Extrusionsprozesses. Mit Treibmitteln aufgeschäumte Folien haben beispielsweise bei der Herstellung von Tragetaschen im Non-Food-Bereich interessante Anwendungsfelder gefunden. Das Aufschäumen bewirkt eine leicht rauhe Oberfläche und lässt die Tragetasche besonders hochwertig und massiv erscheinen. In diesem Zusammenhang ist in der Patentschrift DE-C 37 22 139 eine dreischichtige Folie offenbart, deren Außen- und Innenschicht mit einem Treibmittel aufgeschäumt wird und deren Mittelschicht treibmittelfrei ist. Die Mittelschicht gibt der Tragetasche die nötige Reißfestigkeit und besteht bevorzugt aus HDPE, während die Außen- und die Innenschicht (LDPE, Polystyrol, Polypropylen) nur für das edle Erscheinungsbild zuständig ist.

Ein ähnlicher Folienaufbau wird bei einer zwei- bzw. dreischichtigen, durch Coextrusion hergestellten Folie mit einer bzw. zwei rauhen, aufgeschäumten Seiten in US-A1-2002/01533088 beschrieben.

In DE-A1-198 40 991 ist eine opake, biaxial orientierte Flachfolie aus einem aufgeschäumten thermoplastischen Polymer, beispielsweise einem Polyolefin offenbart, das Zusätze von anorganischen Füllstoffen wie z.B. CaCO₃ oder TiO₂ enthält. Beim beschriebenen Schäumungsprozess entstehen geschlossenzellige Mikrohohlräume, die einen charakteristischen Perlglanzeffekt hervorrufen. Es handelt sich um mehrschichtige Folien, deren Mittelschicht aufgeschäumt wird und deren Innen- und Außenschicht kein Treibmittel enthält, um eine besser bedruckbare, glatte Folie zu erhalten. Diese Folien sollen als synthetisches Papier oder als dekoratives Verpackungsmaterial eingesetzt werden.

Der Anmelderin sind im Zusammenhang mit geschäumten Folien bislang Nahrungsmittelhüllen, insbesondere Wursthüllen, nicht bekannt. Zudem werden in den oben aufgeführten Publikationen keine offenporigen Schäume beschrieben, die jedoch zur Erzeugung von rauhen und gleichzeitig sehr matten Oberflächen essentiell sind.

In der WO 02/094023 sind einschichtige, nahtlose, schlauchförmige, rauchdurchlässige Hüllen auf Polyamidbasis offenbart. Erreicht wird die Durchlässigkeit durch Blasen oder Vakuolen in der Polyamid-Matrix. Erzeugt werden diese durch einen Blasenbildner, der unmittelbar nach der Extrusion oder beim biaxialen Verstrecken die genannten Blasen oder Vakuolen bildet.

In der US-B 6 589 615 ist eine Folie aus thermoplastischem Kunststoff offenbart, die miteinander verbundene Hohlräume (Poren oder Kanäle) aufweist. Erzeugt werden diese Hohlräume mit einem (flüssigen) Mittel, wie Sojaöl, Erdnußöl, Glycerin, Mineralöl oder einem oberflächenaktiven Mittel, wie Sorbitanmonooleat, das mit dem thermoplastischen Kunststoff vermischt wurde, so daß sich ein System mit zwei verschiedenen Phasen bildet.

In der WO 03/073861 ist eine einschichtige Nahrungsmittelhülle aus einem thermoplastischem Gemisch auf Basis von Polyamid offenbart. Die Hülle zeigt eine rauhe Oberfläche, deren Rauhigkeit durch Einarbeiten eines anorganischen und/oder organischen Füllstoffs erreicht wird. Die Hülle weist aus der Oberfläche herausragende Partikel auf.

In den älteren, jedoch nicht vorveröffentlichten Patentanmeldungen DE-A 103 45 839 und DE 10 2004 005642 sind Nahrungsmittelhüllen mit einem Gehalt an organischen bzw. anorganischen Partikeln in der Außenschicht (Z) beschrieben. Auf diese Anmeldungen wird bezüglich der Ausgangs- und Endzusammensetzungen, der verschiedenen Rohstoffkomponenten, ihren Anteilen und ihren Eigenschaften sowie der Herstellung und der Eigenschaften der derart hergestellten Nahrungsmittelhüllen ausdrücklich Bezug genommen.

Es bestand daher die Aufgabe, mehrschichtige coextrudierte thermoplastische Nahrungsmittelhüllen sowie ihre Herstellungsverfahren vorzuschlagen, die so gestaltet werden können, dass sie weitgehend oder gänzlich das Aussehen oder/und die Griffigkeit eines Natur-, Hautfaser- oder faserverstärkten Cellulosedarms aufweisen können.

Die Aufgabe wird gelöst mit einer coextrudierten thermoplastischen Nahrungsmittelhülle aufgebaut aus mindestens zwei Schichten einschließlich einer Außenschicht (Z), die dadurch gekennzeichnet ist, dass zumindest die Außenschicht (Z) eine Porosität von mindestens 5 Vol.-% aufweist, gemessen an Blasen bzw. Poren im wesentlichen in der Ebene der Oberfläche, und dass die Oberfläche der Außenschicht (Z) eine offenporige oder/und kraterartige Oberflächenstruktur und eine gemittelte Rauhtiefe R_{z}, von mindestens 5,0 µm aufweist, und einem Glanzwert, gemessen bei einem Einstrahlwinkel von 60°, von nicht mehr als 30 aufweist.

Die Aufgabe wird außerdem gelöst mit einem Verfahren zur Herstellung einer mindestens zweischichtigen, coextrudierten thermoplastischen Nahrungsmittelhülle, wobei der Zusammensetzung vor der Extrusion mindestens ein Treibmittel oder/und mindestens ein Treibgas zugesetzt wird oder/und die Zusammensetzung so gewählt wird, dass in der Kunststoffmasse durch chemische Reaktionen zwischen ihren Komponenten mindestens ein Gas gebildet wird, so dass das Treibmittel, Gas bzw. Treibgas im Extruder unter hohem Druck und bei hoher Temperatur in der weitgehend oder vollständig geschmolzenen Kunststoffmasse verteilt wird, wobei gegebenenfalls vom Treibmittel Treibgas freigesetzt wird, wobei die Schmelze bei Druckentlastung beim oder/und nach dem Austritt aus dem Extruder verschäumt wird, indem zumindest ein Teil des Gases/der Gase Poren bzw. Blasen bildet, die in der erstarrenden Schmelze bzw. an ihrer Oberfläche zumindest teilweise erhalten bleiben.

Die Aufgabe wird ferner gelöst mit einem solchen Verfahren zur Herstellung einer mindestens zweischichtigen, coextrudierten thermoplastischen Nahrungsmittelhülle wobei die Kunststoffkomponenten für die Außenschicht (Z) und gegebenenfalls auch für mindestens eine weitere Schicht der polymeren Zusammensetzung vor der Extrusion so ausgewählt werden, dass mindestens zwei Kunststoffkomponenten eingesetzt werden, die deutlich unterschiedliche Eigenschaften aufweisen und sich untereinander schlecht verbinden, so dass an den Grenzflächen zwischen diesen Komponenten Poren oder/und Blasen entstehen, die in der erstarrenden Schmelze bzw. an ihrer Oberfläche zumindest teilweise erhalten bleiben.

Die erfindungsgemäße Nahrungsmittelhülle kann insbesondere 2, 3, 4, 5, 6, 7, 8, 9 oder 10 Schichten in Abfolge enthalten. Diese Hülle kann daher in einzelnen Ausführungsformen eine Außenschicht (Z) sowie eine, zwei, drei oder vier weitere Schichten aufweisen. In bevorzugten Ausführungsformen weist die erfindungsgemäße Hülle neben der Außenschicht (Z) insbesondere eine, zwei, drei oder vier weitere Schichten auf, die Funktionsschichten, z.B. Schichten des Typs (A), (B) oder/und (C) sind. Die einzelnen Schichten können sich - müssen sich aber nicht - deutlich voneinander abgrenzen. Zwei aneinander grenzende Schichten können fließende Übergänge zeigen oder/und eine je nach den Bedingungen unruhig rauh wechselnde oder/und im wesentlichen ebene Grenzfläche zwischen zwei Schichten aufweisen.

Die Nahrungsmittelhülle ist insbesondere im wesentlichen schlauchförmig, vorzugsweise von im wesentlichen kreisförmigem Querschnitt, sowie flexibel. Sie kann insbesondere als Wursthülle, aber auch als Hülle für Molkereiprodukte und andere Nahrungsmittel verwendet werden. Die Nahrungsmittelhülle kann beispielsweise in Form von Abschnitten, von gerafften Raupen, von Naturdärmen, z.B. Fettenden oder/und in Kranzformen eingesetzt werden.

Gegenüber dem Stand der Technik zeichnet sich die erfindungsgemäße Wursthülle vor allem durch ihr Erscheinungsbild aus, das einem Hautfaserdarm, faserverstärkten Cellulosedarm oder/und Naturdarm sehr ähnlich gestaltet werden kann, aber auch ein anderes Erscheinungsbild als solche Därme aufweisen kann. Dieses Erscheinungsbild wird häufig durch einen mehrschichtigen Aufbau insbesondere aus synthetischen thermoplastischen Polymeren sowie durch eine an der äußeren Oberfläche angeordneten Schicht (Z) mit einer offenporigen oder/und kraterartigen Oberflächenstruktur, die manchmal geschäumten Folien ähnelt, erzielt.

Der Begriff "offenporige Oberflächenstruktur" soll im Sinne dieser Anmeldung bedeuten, dass mindestens 5 % der Zahl aller Poren einschließlich Blasen in der Außenschicht (Z) keine dreidimensional geschlossene Porenform bzw. Blasenform aufweisen, sondern zur Oberfläche der Außenschicht (Z) hin geöffnet sind. Zumindest ein Teil dieser offenen Poren bzw. Blasen leistet dabei einen Beitrag zur Rauhigkeit und zum stumpfmatten Aussehen dieser Nahrungsmittelhüllen. Der Volumenanteil der Poren bzw. Blasen wird gemessen, indem die Oberfläche der Außenschicht (Z) unter dem Rasterelektronenmikroskop bei senkrechter Aufsicht auf die Oberfläche abgebildet wird. Die Probenoberfläche wird hierzu ausreichend, aber nicht zu dick elektrisch leitend z.B. mit Gold beschichtet. Hierbei wird eine in die Tiefe reichende Pore näherungsweise in einer Tiefe bezüglich ihres mittleren Durchmessers bestimmt, wobei versucht wird, etwa die Mitte zu wählen zwischen dem Ansatz einer Verrundung bzw. Kante am Porenrand, an dem eine Pore etwas größer gemessen wird, und dem Ende der Verrundung bzw. Kante, an dem die Pore kleiner erfasst wird. Diese Messebene liegt oft 0,1 bis 2 µm unter der mittleren Ebene der Oberfläche. Bei Poren bzw. Blasen mit einem kraterartig vorstehenden Rand wird die Messebene vorzugsweise entsprechend geringfügig oberhalb der mittleren Ebene der Oberfläche gemessen, wobei näherungsweise auf die Kraterrandmitte fokussiert wird. "Blasen" werden dabei als große oder/und besonders geformte Poren, z.B. in Formen ähnlich flachen oder/und tiefen Tellern angesehen, die auch zur Porosität beitragen können. Sie sind daher eine Variante der Poren. Vorzugsweise sind jeweils mindestens 5 %, 8 % oder 12 % aller Poren der Außenschicht (Z) zur Oberfläche der Außenschicht (Z) hin geöffnet, besonders bevorzugt jeweils mindestens 16 % oder 20 %, ganz besonders bevorzugt jeweils mindestens 30 %, 45 %, 60 % oder 75 %, vor allem mindestens 90 %. Dieser Anteil kann jedoch je nach den Herstellungsbedingungen und Arten bzw. Größen an Poren bzw. Blasen variieren.

Die Außenschicht (Z) weist vorzugsweise eine Porosität von jeweils mindestens 6 Vol.-%, 8 Vol.-% oder 12 Vol.-% auf, besonders bevorzugt von jeweils mindestens 16 Vol.-% oder 20 Vol.-%, ganz besonders bevorzugt von mindestens 30 Vol.-%.

Gegenüber den aus dem Stand der Technik bekannten Kunststoffhüllen zeichnet sich die erfindungsgemäße Hülle oft durch eine besonders stumpfmatte, samtartige und besonders rauhe Oberfläche aus.

Die offenporige oder/und kraterartige Oberflächenstruktur kann unterschiedlich ausgeprägt sein und gegebenenfalls auch auf deutlich unterschiedlichem Wege erreicht werden.

In einer ersten Ausführungsvariante kann die offenporige Oberflächenstruktur aufgrund einer mehr oder weniger breiten Porengrößenverteilung erzielt werden, wobei ein Teil der Poren an der Oberfläche der Außenschicht (Z) "angeschnitten" ist.

In einer zweiten Ausführungsvariante kann die offenporige oder/und kraterartige Oberflächenstruktur aufgrund von mindestens zwei unterschiedlichen Porengrößenverteilungen erzielt werden, wobei ein Teil der Poren an der Oberfläche der Außenschicht (Z) "angeschnitten" ist. Die erste, kleinere Poren aufweisende Porengrößenverteilung kann dabei gegebenenfalls vorwiegend geschlossene Poren, die sich in der Außenschicht (Z) befinden, aufweisen. Die zweite, vorwiegend im Vergleich zur ersten Porengrößenverteilung größere Poren aufweisende Porengrößenverteilung kann dabei gegebenenfalls im Vergleich zur ersten Porengrößenverteilung unterschiedlich geformte Poren aufweisen.

In einer dritten Ausführungsvariante kann die offenporige oder/und kraterartige Oberflächenstruktur aufgrund von mindestens zwei unterschiedlichen Porengrößenverteilungen erzielt werden, wobei die größeren Poren teilweise, vorwiegend oder gänzlich als Blasen anzusehen sind. Als Blasen werden hier eher besonders große "Poren" angesehen, die oft im wesentlichen ähnlich wie flache oder tiefe Teller oder/und als Poren mit kraterartig hervortretenden Rändern im obersten Bereich der Außenschicht (Z) und somit auch an ihrer Oberfläche auftreten können. Sie treten insbesondere im obersten Bereich der Außenschicht (Z) oder/und an ihrer Oberfläche als flache oder eingewölbte Blasen, als Poren mit kraterartig hervortretenden Rändern oder/und als Poren mit wannenartiger Form auf. Auch hierbei kann gegebenenfalls ein Teil der Poren und kann insbesondere ein Teil der Blasen oder können sämtliche Blasen an der Oberfläche der Außenschicht (Z) "angeschnitten" sein. Die erste, eher kleine oder kleinere Poren aufweisende Porengrößenverteilung kann dabei gegebenenfalls vorwiegend oder gänzlich geschlossene Poren zeigen, die sich in der Außenschicht (Z) befinden. Die zweite, im Vergleich zur ersten Porengrößenverteilung vorwiegend oder gänzlich größere oder große Poren aufweisende Porengrößenverteilung kann dabei gegebenenfalls im Vergleich zur ersten Porengrößenverteilung deutlich unterschiedlich geformte Poren aufweisen. Auch die Blasen können unterschiedliche Formen aufweisen: Sie können einerseits als im wesentlichen flache Blasen in der Oberfläche auftreten, als mehr oder minder eingewölbte Blasen (im wesentlichen eingewölbt) oder/und als im wesentlichen wannenartig in die Oberfläche eingeformte Blasen.

In einer vierten Ausführungsvariante kann die offenporige oder/und kraterartige Oberflächenstruktur aufgrund der deutlich vorherrschenden oder alleinigen Porengrößenverteilung der Blasen erzielt werden, wobei die größeren Poren teilweise, vorwiegend oder gänzlich als Blasen anzusehen sind. Als Blasen werden hier eher besonders große "Poren" angesehen, die im wesentlichen ähnlich wie flache oder tiefe Teller oder/und mit kraterartig hervortretenden Rändern im obersten Bereich der Außenschicht (Z) und somit auch an ihrer Oberfläche auftreten können. Auch hierbei kann gegebenenfalls ein Teil der Poren und kann insbesondere ein Teil der Blasen oder können sämtliche Blasen an der Oberfläche der Außenschicht (Z) "angeschnitten" sein. Soweit noch ein geringer Anteil an kleinen oder kleineren Poren auftritt, können diese gegebenenfalls vorwiegend oder gänzlich geschlossene Poren sein, die sich in der Außenschicht (Z) befinden. Die Blasen zeigen im Vergleich zu den gegebenenfalls noch daneben auftretenden weiteren kleinen oder kleineren Poren vorwiegend oder gänzlich deutlich unterschiedlich geformte Poren. Mit dem Mikroskop oder zumindest beim Auftreten von Poren unter 10 µm Größe mit dem Rasterelektronenmikroskop vergrößert weist die Oberfläche der Außenschicht (Z) eine poröse oder/und kraterartige Topographie mit größtenteils oder vollständig offenen Blasen auf, deren mittlerer Durchmesser d₅₀ häufig weniger als 100 µm beträgt. Hierbei wird in Aufsicht auf die Oberfläche der Außenschicht (Z) gemessen. In manchen Ausführungsvarianten können diese Blasen auch mittlere Durchmesser von kleiner als 200 µm, kleiner als 500 µm, kleiner als 1000 µm, kleiner als 1500 µm, kleiner als 2000 µm, kleiner als 2500 µm oder sogar kleiner als 3000 µm aufweisen.

In einer fünften Ausführungsvariante kann die offenporige oder/und kraterartige Oberflächenstruktur vorwiegend oder gänzlich aufgrund von Poren gebildet werden, die den Formen von vorwiegend oder gänzlich feinporigen bzw. feinzelligen Schäumen ähneln wie z.B. ähnlich oder entfernt ähnlich einem Styroporschaum.

Die Ränder dieser Poren können dabei in allen Ausführungsvarianten gegebenenfalls - insbesondere je nach Herstellungsbedingungen bedingt - zum Porenraum verrundet sein, kantig sein oder/und aber auch kraterartig aufgeworfen sein. Die Ränder dieser offenen Poren bzw. Blasen können dabei in manchen Fällen eher nur schwach gewölbt sein und dann z.B. die Form von flachen oder tiefen Tellern näherungsweise aufweisen, können dabei in manchen Fällen gegebenenfalls auch hervorstehende Kraterränder aufweisen, können aber auch stärker in die Tiefe führen, letzteres insbesondere bei kleineren oder unregelmäßig geformten Poren. Vielfach sind die Porenöffnungen dieser in die Tiefe der Außenschicht (Z) führenden Poren im Bereich der Oberfläche der Außenschicht (Z) in der Aufsicht auf die Oberfläche im wesentlichen kreisrund, oval oder im Querschnitt polygonal stark verrundet geformt.

In einer sechsten Ausführungsvariante kann die offenporige oder/und kraterartige Oberflächenstruktur vorwiegend aufgrund von Porenräumen gebildet werden, die sich vorwiegend oder gänzlich zwischen faserbündelartig extrudierten Bereichen der thermoplastischen Außenschicht (Z) oder/und zwischen in ihr eingelagerten Fasern, die gegebenenfalls in eine Kunstharzmasse teilweise oder vollständig eingebettet sind, befinden. Die Nahrungsmittelhüllen zeigen dann oft eine schwache oder starke Texturierung, nach der auch die Porenräume mehr oder weniger ausgerichtet sind. Diese Poren sind oft länglich gestreckt. Sie können hierbei teilweise untereinander durch Kanäle verbunden sein und eine sogenannte durchströmbare Porosität bilden. In vielen Fällen werden diese Poren im wesentlichen ellipsoidische oder/und im wesentlichen stark verrundete polygonale Formen einnehmen, wobei diese oft unregelmäßig oder/und besonders stark in ihrer Länge gestreckt sind. Durch diese Texturierung lässt sich ein besonders samtartiger Glanz erzeugen. Die Texturierung ist hierbei vorzugsweise im wesentlichen in Extrusionsrichtung ausgerichtet, wobei oft jedoch starke Winkelabweichungen von der Hauptextrusionsrichtung auftreten. Auch bei diesen Poren ist zumindest ein kleiner Teil "angeschnitten" und mündet in die Oberfläche der Außenschicht (Z) ein. Die Ränder dieser Poren sind eher verrundet, kantig oder/und unregelmäßig im Bereich der Oberfläche der Außenschicht (Z). In manchen Ausführungsvarianten können diese Poren auch mittlere Durchmesser kleiner als 200 µm, kleiner als 500 µm, kleiner als 1000 µm, kleiner als 1500 µm, kleiner als 2000 µm, kleiner als 2500 µm oder sogar kleiner als 3000 µm aufweisen.

In einer siebten Ausführungsvariante kann die offenporige oder/und kraterartige Oberflächenstruktur gebildet werden aus den bei einer Texturierung gebildeten Porenräumen der in der sechsten Ausführungsvariante beschriebenen Poren, wobei auch ein Anteil an Poren bzw. Blasen entsprechend der ersten, zweiten, dritten oder/und vierten Ausführungsvariante anwesend sein kann.

Grundsätzlich können zwischen diesen Ausführungsvarianten auch alle Übergangsformen hergestellt werden.

Die mehrschichtige Nahrungsmittelhülle enthält einen gegebenenfalls sehr hohen Anteil an synthetischen thermoplastischen Polymeren. Insbesondere die Außenschicht (Z) und gegebenenfalls auch mindestens eine weitere Schicht der Nahrungsmittelhülle enthält einen Anteil von mindestens 50 Gew.-% aus mindestens einem thermoplastischen Kunststoff.

In einer ersten Ausführungsvariante der Herstellung der erfindungsgemäßen Nahrungsmittelhüllen wird zumindest die extrudierte Schicht, die die Außenschicht (Z) bildet, und gegebenenfalls auch mindestens eine weitere Schicht der Nahrungsmittelhülle physikalisch oder/und chemisch verschäumt. Hierzu wird vorzugsweise eine Zusammensetzung für diese Schicht ausgewählt, die sich unter den Extrusionsbedingungen verschäumen lässt, d.h. insbesondere eine geeignete Viskosität unter den physikochemischen Bedingungen zum Zeitpunkt des Verschäumens aufweist, so dass Gasblasen gebildet werden, ohne dass die Gasblasen die flüssige oder zähflüssige Masse zu schnell oder/und vollständig verlassen. Hierbei kann es in manchen Ausführungsformen besonders bevorzugt sein, die Kunststoffkomponenten für diese Schicht so auszuwählen, dass mindestens zwei Komponenten eingesetzt werden, die deutlich unterschiedliche Eigenschaften aufweisen und sich untereinander schlecht verbinden lassen und somit an den Grenzflächen zwischen diesen Komponenten Poren leichter entstehen lassen. Das können beispielsweise zwei thermodynamisch oder/und rheologisch miteinander unverträgliche Kunststoffkompönenten sein. Das können beispielsweise Kunststoffkomponenten sein, die einerseits eher hydrophil und andererseits eher hydrophob sind. Das können aber auch solche sein, die alternativ oder zusätzlich als Schmelzen bei einer bestimmten Temperatur im Extruder bzw. des extrudierten Schlauches unmittelbar nach Verlassen der Extrusionsdüse deutlich unterschiedliche Viskositäten oder/und unterschiedliche Erweichungs- bzw. Schmelzpunkte aufweisen. Diese Poren bzw. Blasen entstehen verstärkt bei der Bewegung der Kunststoffmasse und füllen sich gegebenenfalls langsam mit Gas(en), wobei sie sich u.U. weiter vergrößern oder/und in der Form verändern können.

Das Verschäumen kann dabei so eingestellt werden, dass ein geringer, mittlerer oder hoher Anteil an Poren ausgebildet wird oder/und dass ein geringer, mittlerer oder hoher Anteil an Blasen ausgebildet wird. Hierbei können die Poren bzw. Blasen gegebenenfalls auch aufgrund der Extrusion Längserstreckung zeigen und ihre größte Längserstreckung mehr oder weniger in Extrusionsrichtung ausrichten. Häufig schwankt dann die Richtung der größten Längserstreckung dieser Poren bzw. Blasen vorwiegend um beispielsweise ± 10 ° um die Extrusionsrichtung, vorzugsweise um ± 20 °, häufig auch um etwa ± 30 °.

Allein die Ausbildung einer Vielzahl von geschlossenen Poren beeinflusst den optischen Eindruck der erfindungsgemäßen Nahrungsmittelhülle. Vorteilhafterweise ist jedoch ein Anteil der Poren bzw. Blasen zur Oberfläche der Außenschicht (Z) geöffnet. Dieser Anteil kann mindestens 1, 3 oder 5 Prozent der Porenzahl der Außenschicht (Z) betragen, vorzugsweise mindestens 8, 10 oder 15 Prozent, besonders bevorzugt mindestens 20, 30 oder 40 Prozent, ganz besonders bevorzugt mindestens 50, 60 oder 70 Prozent, vor allem mindestens 80, 90 oder 95 Prozent. Besonders bevorzugt ist ein Teil der Poren oder/und der Blasen so ausgebildet, dass sie eine schwache oder starke Wölbung oder/und Rauhigkeit über den geschlossenen Poren aufweisen oder/und dass sie eine Kantigkeit oder/und hervorstehende Ränder am Rand der Poren oder/und der Blasen aufweisen. Hierdurch kann der stumpfmatte Eindruck der Nahrungsmittelhülle gegenüber nur vielen geschlossenen Poren deutlich verstärkt werden. Außerdem wirken sich die geöffneten Poren auf die Rauhigkeit der Oberfläche der Außenschicht (Z) förderlich aus, so dass die Nahrungsmittelhülle griffiger wird. Die Rauhigkeit dieser Oberfläche und ihre Griffigkeit werden besser, je kantiger die Ränder der Poren bzw. Blasen werden, insbesondere je stärker ihre Ränder z.B. kraterartig hervorstehen und teilweise auch, je größer ihre Durchmesser sind. Hierbei kann es vorteilhaft sein, besonders große Blasen mit stärker hervorstehenden Kraterrändern in der Oberfläche der Außenschicht (Z) zu haben. Darüber hinaus ist es besonders vorteilhaft, wenn zumindest ein Teil der Poren oder/und Blasen - gemessen als mittlerer Durchmesser einer Pore/Blase gemittelt über die Messwerte bei Drehung um 180 ° in Aufsicht auf die Oberfläche der Außenschicht (Z) - einen Durchmesser von mindestens 20 µm oder von mindestens 40 µm, vorzugsweise von mindestens 60 µm oder von mindestens 80 µm, besonders bevorzugt von mindestens 100 oder von mindestens 150 µm, ganz besonders bevorzugt von mindestens 200 oder von mindestens 300 µm aufweisen. Dieser Anteil der Zahl der Poren/Blasen, der eine solche Mindestgröße aufweist, beträgt vorzugsweise mindestens 50 % oder mindestens 40 %, besonders bevorzugt mindestens 30 % oder mindestens 20 %, ganz besonders bevorzugt mindestens 10 % oder mindestens 5 %, insbesondere besonders bevorzugt mindestens 3 % oder mindestens 1 %. Die Messung erfolgt dabei in senkrechter Aufsicht auf die Oberfläche der Außenschicht (Z) unter einem Rasterelektronenmikroskop oder anhand von rasterelektronenmikroskopischen Aufnahmen, um die Durchmesser der Poren/Blasen in der Ebene oder wenige µm unter der Ebene der Oberfläche der Außenschicht (Z) zu ermitteln.

In einer weiteren Ausführungsvariante der Herstellung der erfindungsgemäßen Nahrungsmittelhüllen wird zumindest die extrudierte Schicht, die die Außenschicht (Z) bildet, und gegebenenfalls auch mindestens eine weitere Schicht der Nahrungsmittelhülle derart mit mindestens einer Art Fasern oder/und mindestens einem partikulären Füllstoff versetzt, dass insbesondere zwischen Fasern, zwischen Faserhäufungen, im Bereich von Füllstoffpartikeln oder/und im Bereich von Partikelansammlungen wie Agglomeraten oder/und Aggregaten Poren gebildet werden. Oft sind die so gebildeten Poren fein- oder/und grobzellig. Hierbei können ein Teil oder alle Poren beim oder/und durch das Verstrecken insbesondere an Fasern, Faserhäufungen wie z.B. Faserbündeln oder/und an Partikeln bzw. Partikelansammlungen gebildet werden. Die Fasern können hierbei auch in besonders konfektionierter Form, z.B. als Fasermatten oder/und als Faserbündel zugesetzt werden. Hierbei können gegebenenfalls netzartige Strukturen einerseits an Kunststoffmatrix oder/und gegebenenfalls aber auch an miteinander verbundenen Porenräumen gebildet werden. Hierzu wird vorzugsweise eine Zusammensetzung für diese mindestens eine Schicht ausgewählt, die die Fasern bzw. Füllstoffpartikel adhäsiv einbinden kann. Hierbei können die Poren gegebenenfalls auch aufgrund der Extrusion Längserstreckung zeigen und ihre größte Längserstreckung mehr oder weniger in Extrusionsrichtung ausrichten. Häufig schwankt dann die Richtung der größten Längserstreckung dieser Poren bzw. Blasen vorwiegend um beispielsweise ± 10° um die Extrusionsrichtung, vorzugsweise um ± 20 °, häufig auch um etwa ± 30°. Je größer die Streuung um die Extrusionsrichtung ist, desto weniger ist der samtartige stumpfmatte Eindruck richtungsabhängig. Das Verhältnis der größten Längserstreckung solcher Poren zu ihrem Durchmesser senkrecht hierzu, der sogenannte Streckungsgrad, kann hierbei oft in weiten Bereichen variieren und nimmt dann vielfach Werte zwischen 1 (im wesentlichen kreisrund), 2, 3 (im wesentlichen ellipsoidisch mit einem Achsenverhältnis von 3 : 1), 4, 5, 6, 7, 8, 9 oder/und sogar 10 an.

In einer dritten Ausführungsvariante der Herstellung der erfindungsgemäßen Nahrungsmittelhüllen kann zumindest die extrudierte Schicht, die die Außenschicht (Z) bildet, und gegebenenfalls auch mindestens eine weitere Schicht der Nahrungsmittelhülle aufgrund des chemischen oder/und physikalischen Verschäumens und gleichzeitig auch aufgrund des Zusatzes an jeweils mindestens einer Art Fasern oder/und Füllstoffpartikel Poren bzw. Blasen aufweisen, die beim Verschäumen entstanden waren und die zwischen Fasern, zwischen Faserhäufungen oder/und im Bereich von Füllstoffpartikeln bzw. Partikelansammlungen gebildet wurden.

Mit den verschiedenen Herstellungsvarianten, verschiedenen Zusammensetzungen sowie mit Zusätzen von unterschiedlichen Fasern oder/und vorkonfektionierten Fasern und verschiedenen Partikelarten und Partikelgrößen lassen sich sehr unterschiedlich aussehende, sehr unterschiedliche matte und sehr unterschiedlich rauhe Oberflächen einstellen. Damit ist es möglich, eine große Bandbreite an verschiedenartigen hochwertigen Nahrungsmittelhüllen zu imitieren.

Die offenporige oder/und kraterartige Oberflächenstruktur der Außenschicht (Z) kann in einem Teil der Ausführungsformen durch Verschäumen auf physikalischem oder/und chemischem Wege erzeugt werden:

Bei der physikalischen Verschäumung wird mindestens eine insbesondere niedrig siedende Flüssigkeit oder/und mindestens ein Treibgas mit Hilfe eines Extruders unter Druck in der Polymerschmelze gelöst, beispielsweise mindestens ein aliphatischer Kohlenwasserstoff wie z.B. Pentan, Hexan oder/und Heptan, mindestens ein Fluorkohlenwasserstoff wie z.B. Trichlorfluormethan oder/und Dichlordifluormethan, oder/und mindestens ein Gas wie z.B. Kohlendioxid, Stickstoff, Edelgas oder/und Luft. Häufig werden alle physikalischen Treibmittel, die zugegeben werden sollen, unter hohem Druck verflüssigt, bevor sie unter Druck direkt in die Polymerschmelze der Zusammensetzung der Schicht, die später z.B. die Außenschicht (Z) bildet, eingeleitet werden, die sich im Zylinder des Extruders unter Druck und erhöhter Temperatur befindet. Denn Flüssigkeiten können einfacher und genauer dosiert werden als Gase. Am Düsenaustritt kommt es zu einer schlagartigen Druckverminderung, so dass das in der Schmelze gelöste Treibgas austritt und die flüssige oder zähflüssige Polymerschmelze verschäumt werden kann. Die entstehende Porenstruktur und die offenporige Oberflächenstruktur werden schließlich bei dem Abkühlprozess eingefroren.

Beim chemischen Verschäumen werden die Treibmittel üblicherweise vor der Verarbeitung der Zusammensetzung zugegeben in Form einer Flüssigkeit, eines Pulvers oder/und eines Masterbatch-Granulats - letzteres aus in einer Kunststoffmatrix eingebettetem Treibmittel verteilt im Polymergranulat. Bei den Treibmitteln handelt es sich vorzugsweise um organische oder/und anorganische Verbindungen, die unter Erhitzung das Treibgas als gasförmige Spaltprodukte freisetzen, wie Stickstoff, Kohlendioxid, Ammoniak oder/und Wasser. Stattdessen oder zusätzlich kann das Gas auch als Nebenprodukt des Molekulargewichtsaufbaus eines Polymers entstehen, wie das beispielsweise bei der Herstellung eines Polyurethanschaums der Fall ist. Die Reaktion von im Polymer anwesenden freien Isocyanatgruppen mit Wasser kann hierbei zur Freisetzung von Kohlendioxid führen.

Gängige chemische Treibmittel sind beispielsweise Natriumhydrogencarbonat (Zersetzungsbereich 130 - 150 °C, entstehende Gase CO₂, H₂O), 4,4'-Oxybis(benzol-sulfonylhydrazid) (Zersetzungsbereich 140 - 165 °C, entstehende Gase N₂, H₂O), Azodicarbonamid (Zersetzungsbereich 200 - 220 °C, entstehende Gase N₂, CO, CO₂, NH₃) oder/und Zitronensäurederivate (Zersetzungsbereich 200 - 220 °C, entstehende Gase CO₂, H₂O). Die Zersetzungstemperatur des chemischen Treibmittels wird vielfach so gewählt, dass sie mit den obersten Verarbeitungstemperaturen der aufzuschäumenden Kunststoffschicht zusammenfällt.

Bei der Zersetzung der chemischen Treibmittel können gegebenenfalls feste Rückstände übrig bleiben, die als aktive Nukleierungsmittel wirken können, an denen das Poren- bzw. Blasenwachstum beginnen kann. Zusätzlich können passive Nukleierungsmittel, die sich in dem durchfahrenen Druck- und Temperaturbereich nicht zersetzen, hinzugegeben werden. Die Nukleierungsmittel weisen meistens mittlere Partikelgrößen d₅₀ unter 2 µm auf. Beispielsweise können feinverteilte Pulverqualitäten von Talkum, Siliciumdioxid, Kaolin, Kieselgur oder/und Calciumcarbonat als passive Nukleierungsmittel zugesetzt werden. Wenn mindestens ein anorganischer oder/und mindestens ein organischer Füllstoff zugegeben wird, kann dieser, insbesondere wenn er besonders fein vorliegt, als Nukleierungsmittel wirken.

Ohne aktive Nukleierungsmittel und ohne passive Nukleierungsmittel aufgeschäumte Folien zeigen häufig eine vergleichsweise grobporige bzw. grobzellige Poren- bzw. Blasenstruktur. Der Zusatz eines Nukleierungsmittel kann eine deutlich feinere bzw. feinzelligere Poren- bzw. Blasenstruktur bewirken, wobei die Poren bzw. Blasen oft desto kleiner werden, je feiner das Nukleierungsmittel ist. Aktive Nukleierungsmittel erzeugen hierbei manchmal noch feinporösere bzw. feinzelligere Strukturen als passive Nukleierungsmittel.

Als Kunststoffkomponente in der Außenschicht (Z) sind prinzipiell alle thermoplastischen Polymere geeignet, insbesondere thermoplastische Polyurethane, thermoplastische Polyetherurethane, Polyolefine, aliphatische (Co)Polyamide, aliphatische oder/und teilaromatische (Co)Polyester, Polyesteretherurethane, daneben gegebenenfalls auch Vinylcopolymere wie z.B. Ethylen-Vinylacetat-Copolymere sowie Polystyrole und styrolhaltige Vinylcopolymere. Unter den Polyurethanen sind Polyaddukte, die beispielsweise durch Reaktion von Toluylendiisocyanat (TDI), Isophorondiisocyanat oder/und Hexamethylendiisocyanat mit Poly-1,2-propandiol (Polypropylenglykol, PPG) oder/und Poly-1,4-butandiol (Polytetramethylenglykol, PTMG) erhältlich sind, bevorzugt. Als Polyolefine eignen sich z.B. sowohl Homo- als auch Copolymere von Ethylen oder/und Propylen. Diese können auch mit Säureeinheiten funktionalisiert sein. Weiterhin geeignet sind Polymere aus den Gruppen thermoplastische Elastomere und Kautschuke. Unter den thermoplastischen Elastomeren werden Kunststoffe verstanden, die gleichzeitig harte Segmente (hoher Tg, kristallisierbar, geringe Dehnung) und weiche Segmente (niedrige Tg, geringe Kristallisationsneigung, hohe Dehnung) enthalten. Diese Hart- und Weichsegmente sind miteinander unverträglich, so dass es zu einer Mikrophasentrennung kommt, wobei die harten, kristallinen Phasen reversible Vernetzungspunkte darstellen. Beispiele für solche thermoplastischen Elastomere sind unter anderem Styrol-Butadien- bzw. Styrol-Isopren-Triblock-Copolymere, Ethylen-Propylen-Dien-Terpolymere-Polypropylen-Legierungen, Naturkautschuk-Polypropylen-Legierungen, Ethylenvinylacetat-Vinylidenchlorid-Legierungen, Polyetherester, Polyetheramide. Unter Kautschuken werden vernetzte Polymere verstanden, denen als Monomereinheiten zumindest teilweise Isopren, Butadien oder/und sonstige Diene zugrunde liegen. Unter den Polyamiden sind PA6, PA66, PA12, PA6/66 und PA6/12 besonders geeignet. Unter den Polyestern sind Polylactid, Polycaprolacton, Polykondensate aus aliphatischen Diolen mit aromatischen und gegebenenfalls zuätzlich aliphatischen Dicarbonsäuren, z.B. Poly(butylenterephthalat) bevorzugt. Die Kunststoffkomponente der Außenschicht (Z) kann im wesentlichen entweder aus einem einzigen der genannten Polymere oder aus einem Gemisch von mehreren der genannten Polymere bestehen oder diese genannten Polymere zu mindestens 50 Gew.-% enthalten, vorzugsweise zu mindestens 60 Gew.-%, besonders bevorzugt zu mindestens 70 Gew.-%, ganz besonders bevorzugt zu mindestens 80 Gew.-%, zu mindestens 90 Gew.-% oder zu mindestens 95 Gew.-%.

Generell gilt für jedes Kunststoff-Treibmittel-System in der Außenschicht (Z), dass sich die Viskosität der Schmelze nach dem Austritt aus der Extrusionsdüse in einem relativ engen Bereich bewegen muss. Eine zu hohe Viskosität verhindert die Blasen- und Porenbildung und eine zu niedrige führt hingegen zum Zerplatzen und Zusammenfließen der Blasen und Poren.

Neben den bereits erwähnten feinpulverigen Nukleierungsmitteln, kann die Außenschicht (Z) mindestens eine Art von weiteren anorganischen bzw. organischen Partikeln enthalten, die vorzugsweise deutlich grobkörniger sind und die helfen, die Oberfläche der Außenschicht (Z) noch rauher, matter und natürlicher erscheinen zu lassen.

Als sehr feinkörnige, feinkörnige oder/und grobkörnige anorganische Partikel bzw. partikuläre Füllstoffe eignen sich unter anderem:
1. Fasern aus Glas wie z.B. Glasfasern, Glasfilamente oder/und Glasstapelfasern, Kurzfasern, Whisker, insbesondere Fasern bis 300 µm, bis 200 µm oder bis 100 µm Länge, die gegebenenfalls auch als Fasermatten, Faserbündel usw. in die Kunststoffmatrix eingebunden werden können;
2. Kurzfasern aus Steinwolle wie z.B. Basaltwolle, Schlackenwolle oder/und Mineralwollfasern;
3. Füllstoffe bzw. Verstärkungsmaterialien aus Carbonat(en) wie z.B. aus Kreide, Kalksteinmehl, Calcit, gefälltem Calciumcarbonat, Magnesiumcarbonat, Bariumcarbonat, Dolomit oder/und anderen Mischcarbonaten;
4. Sulfate wie z.B. Bariumsulfat oder/und Calciumsulfat;
5. Silicate wie z.B. Talk, Pyrophyllit, Chlorite, Hornblenden, Glimmer, Kaoline, Wollastonit, Gesteinsmehle wie z.B. Schiefermehl, gefällte oder/und natürliche Alkali-haltige oder/und Erdalkali-haltige Silicate, Silicate mit mehreren Kationen wie z.B. MgFe-, AlMg-, CaAl-, NaAl- bzw. KAI-Silicate, Feldspäte, Feldspatvertreter, Mullite, Zeolithe oder/und Ca-Metasilicate;
6. Kieselsäuren von unterschiedlicher Art wie z.B. Quarz, Quarzgut, Cristobalit, Erden oder/und Mahlgüter von Stoffen mit sehr hohem SiO₂-Gehalt wie z.B. Kieselgur, Neuburger Kieselerde, gefällte bzw. pyrogene Kieselsäure, Glasmehl, Bimsmehl, Perlit, feingemahlene Fritten oder/und (Mikro)glaskugeln oder/und Aluminiumsilicatkugeln als Vollkugeln, Hohlkugeln oder/und deren Fragmenten;
7. Oxide oder/und Hydroxide wie z.B. Aluminiumhydroxide, Aluminiumoxide, Magnesiumhydroxid, Magnesiumoxid, Titandioxide oder/und Siliciumdioxide oder/und
8. weitere wie z.B. Kohlenstofffasern, Ruß- oder/und Graphitpartikel.

Insbesondere bestehen die anorganischen Partikel vorwiegend oder weitgehend aus Partikeln auf Basis von Aluminiumoxid, Aluminiumcarbonat, Aluminiumphosphat, Erdalkalicarbonat, Siliciumdioxid, Silicat, Sulfat, Gestein oder/und glasartiger Substanz. Insbesondere bestehen die Fasern aus einem Alkalisilicatglas, Aluminiumsilicatglas, Borosilicatglas oder/und Gesteinsglas.

Die Oberfläche der anorganischen Partikel kann z.B. mit einem Haftvermittler modifiziert sein, so dass eine höhere Verträglichkeit mit der umgebenden Kunststoffmatrix erzielt werden kann, oder farblich beschichtet sein. Die mittlere Korngröße der anorganischen Partikel d₅₀ ist in vielen Ausführungsvarianten größer als 10 µm, vorzugsweise im Bereich von 15 bis 100 µm, besonders bevorzugt im Bereich von 20 bis 75 µm. Sie kann vorzugsweise größer sein als 12 µm, besonders bevorzugt größer als 15 µm oder größer als 18 µm, ganz besonders bevorzugt größer als 21 µm, 24 µm oder sogar größer als 27 µm, vor allem größer als 30 µm, 35 µm, 40 µm, 45 µm oder sogar größer als 50 µm.

Die organischen Partikel, die der Zusammensetzung insbesondere jener Schicht, aus der später z.B. die Außenschicht (Z) gebildet wird, gegebenenfalls zugesetzt werden und dann in der Zusammensetzung der jeweiligen Schicht der hieraus gebildeten Nahrungsmittelhülle enthalten sind, bestehen bevorzugt aus jeweils mindestens einem Polysaccharid, einem Protein, einem hochtemperaturstabilen Kunststoff oder/und einer Art Fasern. Geeignete Polysaccharide sind insbesondere native oder/und thermoplastische Stärke (TPS) bzw. Stärkederivate. Im Bereich der nicht derivatisierten Stärke ist native oder/und thermoplastifizierte Mais- oder/und Kartoffelstärke bevorzugt. Stärkederivate sind beispielsweise Stärkeester, wie Stärkeacetate, -maleate, -propionate, -butyrate, - lauroate oder/und -oleate, Stärkexanthogenate, -phosphate, -sulfate oder/und - nitrate, Stärkeether, wie Stärkemethylether, -ethylether, -propylether, -butylether, -alkenylether, -hydroxyethylether oder/und -hydroxypropylether, gepfropfte Stärken, insbesondere mit Maleinsäure- oder Bernsteinsäureanhydrid gepfropfte Stärke oder/und oxidierte Stärken, wie Dialdehydstärke, Carboxystärke oder/und mit Persulfat abgebaute Stärke. Alternativ zu oder in Kombination mit den Partikeln aus Stärke bzw. Stärkederivaten können Partikel aus weiteren Polysacchariden enthalten sein, insbesondere pflanzliche Pulver oder/und Fasern wie u.a. solche aus Cellulose, Baumwolle, Kapok, Flachs, Leinen, Hanf, Jute, Kenaf, Ramie, Sisal, Torf, Stroh, Weizen, Kartoffeln, Tomaten, Karotten, Kokos, Ananas, Äpfeln, Orangen, Fichte, Kiefer, Kork usw.. Unter den Fasern bzw. partikulären Pulvern aus hochtemperaturstabilen Kunststoffen kommen beispielsweise solche auf Basis von hochkristallinen Polyethylenen, Propylen-Homopolymeren, teilaromatischen Polyamiden, Polyaramiden, Polyacrylnitrilen, Fluorpolymeren, Polysulfonen, Polyethersulfonen, Polyetherketonen, Polyphenylensulfiden, Polyimiden, (teil)aromatischen Polyestern, Polychinoxalinen, Polychinolinen, Polybenzimidazolen oder/und Leiterpolymeren in Frage. Solche Komponenten haben sich neben den Stärken bzw. Stärkederivaten oder/und sonstigen Polysacchariden ebenfalls in vielen Fällen als sehr wirksam für die Erzeugung einer rauhen, strukturierten Oberfläche erwiesen. Die in der Außenschicht enthaltene organische Substanz hat zweckmäßigerweise eine mittlere Partikelgröße d₅₀ im Bereich von 10 bis 150 µm, bevorzugt im Bereich von 15 bis 100 µm, besonders bevorzugt im Bereich von 20 bis 75 µm. Sie kann vorzugsweise größer sein als 5 µm oder größer als 10 µm, besonders bevorzugt größer als 15 µm oder größer als 20 µm, ganz besonders bevorzugt größer als 25 µm, 30 µm, 35 µm, 40 µm, 45 µm oder sogar größer als 50 µm, vor allem größer als 55 µm, 60 µm, 65 µm, 70 µm, 75 µm oder sogar größer als 80 µm.

Faserige organische Substanzen ordnen sich meistens mehr oder weniger parallel zur Hüllenoberfläche an und können daher auch länger sein als die Dicke der sie umgebenden Polymerschicht. Die Länge solcher faserigen Substanzen liegt daher im wesentlichen vorzugsweise im Bereich von 1 bis 1000 µm, bevorzugt im Bereich von 10 bis 500 µm, besonders bevorzugt im Bereich von 15 bis 300 µm, ganz besonders bevorzugt im Bereich von 20 bis 200 µm oder 25 bis 150 µm, vor allem im Bereich von 30 bis 125 µm, 35 bis 100 µm, 40 bis 90 µm, 43 bis 80 µm oder 46 bis 75 µm.

Die Außenschicht (Z) kann darüber hinaus weitere hoch- oder/und niedrigmolekulare Bestandteile enthalten, beispielsweise mindestens eine weichmachende Substanz (wie Glycerin, Polyethylenglykol, ein Glycerincarbonsäureester und/oder Phthalsäureester), Stabilisatoren, bakteriziden Substanzen und fungiziden Substanzen.

Die Herstellung des Gemisches (Zusammensetzung) aus der thermoplastischen Kunststoffmatrix und der anorganischen bzw. organischen Substanz für Schicht (Z) erfolgt in der Regel in einem der Schlauchextrusion vorgeschalteten Compoundierungsschritt nach an sich bekannten Verfahren. Die oben angegebenen zusätzlichen Substanzen (Glycerin, Polyethylenglykole, Glycerincarbonsäureester, Phthalsäureester, Stabilisatoren, bakterizide oder/und fungizide Substanzen) werden ebenfalls vorzugsweise während des Knet- bzw. Mischprozesses zugegeben und gleichmäßig eingearbeitet.

Vorzugsweise weist mindestens eine weitere Schicht neben der Außenschicht (Z) die für Kunststoffhüllen typischen mechanischen Eigenschaften auf, wie hohe Reißfestigkeit und hohe Elastizität. Diese mindestens eine Schicht ist vielfach als tragende Schicht der Nahrungsmittelhülle von Bedeutung. Gegebenenfalls sorgt mindestens eine Schicht neben der Außenschicht (Z) für eine hohe Gas- und Wasserdampfdichtigkeit. In einzelnen Ausführungsformen kann auch die Außenschicht (Z) eine hohe Gas- und Wasserdampfdichtigkeit aufweisen.

Diese weiteren Schichten neben der Außenschicht (Z) enthalten bevorzugt Kunststoffe auf Basis von (Co)Polyamid, Polyolefin, Ethylen-vinylalkoholcopolymer (EVOH), Vinylidenchlorid-(co)polymer oder/und (Co)Polymerisate mit Haftvermittler-Eigenschaften. Essentiell sind Schichten aus Polyamid. Besonders bevorzugt ist, dass mindestens eine der Schichten der Nahrungsmittelhülle einen hohen Anteil von mindestens einem (Co)Polyamid aufweist. Dieser Anteil beträgt bevorzugt mindestens 50 oder mindestens 60 Gew.-%, besonders bevorzugt mindestens 70 oder mindestens 80 Gew.-%, ganz besonders bevorzugt mindestens 90 oder mindestens 95 Gew.-%.

Die (Co)Polyamid-reicheren Schichten (nachfolgend mit "A" abgekürzt) können ein oder mehrere aliphatische Co-Polyamide, ein oder mehrere aliphatische Polyamide sowie gegebenenfalls auch einen Gehalt an mindestens einem teilaromatischen (Co)Polyamid enthalten. Beispiele, die hierfür beliebig kombinierbar sind, sind:
- aliphatische Polyamide: PA6, PA66, PA12;
- aliphatische Copolyamide: PA4/6, PA6/66, PA6/69, PA6/9, PA6/10, PA6/12;
- Polyetheramide, Polyesteramide, Polyetheresteramide, Polyamidurethane, Poly(ether-block-amide);
- teilaromatische Polyamide: PA6-I, Nylon-MXD6 (Polykondensat aus m-Xylyendiamin und Adipinsäure)
- teilaromatische Copolyamide: PA6-I/6-T, PA-6/6-I.

Besonders bevorzugte Komponenten sind PA6, PA66, PA12, PA6/66, Nylon-MXD6 und PA6-I/6-T. Besonders bevorzugte Mischungen enthalten mindestens zwei dieser Polyamide. Der Anteil an teilaromatischen (Co)-Polyamiden beträgt vorzugsweise nicht mehr als 40 Gew.-% bezogen auf eine Schicht (A), besonders bevorzugt sogar nicht mehr als 25 Gew.-%.

Zusätzlich kann die Schicht (A) noch andere Polymere enthalten, beispielsweise olefinische Copolymere wie EMAA (Ethylen-Methacrylsäure-Copolymer), hieraus abgeleitete lonomere, EVOH oder auch (heiß-)wasserlösliche synthetische Polymere wie z.B. Polyvinylalkohole - gegebenenfalls teilweise oder/und vollständig verseift, Copolymere des Vinylalkohols mit Propen-1-ol, Polyalkylenglykole, Polyvinylpyrrolidon, Copolymere aus Vinylpyrrolidon mit mindestens einem α,β-olefinisch ungesättigten Monomerbaustein, Polymerisate von N-Vinylalkylamiden oder (Co)Polymere der Acrylsäure oder/und des Acrylamids. Der Anteil der weiteren Polymere beträgt vorzugsweise nicht mehr als 35 Gew.-% bezogen auf Schicht (A). Darüber hinaus können die Schichten (A) auch noch Pigmente oder/und sonstige Kunststoff-typische Additive enthalten.

In manchen Fällen ist es bevorzugt, dass mindestens eine Schicht als Wasserdampfbarriere wirkt. Dies kann mit mindestens einer polyolefinischen Schicht erzielt werden. Die polyolefinischen Schichten (nachfolgend mit "B" abgekürzt) bestehen üblicherweise im wesentlichen aus Polyethylen, Polypropylen oder/und aus Copolymeren mit Einheiten aus Ethylen, Propylen oder/und α-Olefinen mit 4 bis 8 C-Atomen oder/und aus Dienen. Auch funktionalisierte Vinylmonomere wie z. B. Vinylacetat, (Meth)Acrylsäure oder/und (Meth)Acrylsäureester kommen als Co-Bausteine in Frage. Geeignet sind insbesondere C₂/C₃- oder/und C₂/C₈-Copolymere. Den Schichten (B) kommt in erster Linie die Funktion einer Feuchtigkeitsbarriere zu, da Polyolefine gemeinhin sehr geringe Wasserdampfdurchlässigkeiten besitzen. Darüber hinaus können die Schichten (B) noch Pigmente enthalten, wie sie typischerweise zur Einfärbung oder zum UV-Schutz eingesetzt werden. Insbesondere diese Schichten können auch eingefärbt sein.

Um zusätzlich eine gute Barriere für Sauerstoff und sonstige Gase zu erzielen, können bei Bedarf Schichten aus Kunststoff(en) mit entsprechender Sperrwirkung hinzugefügt werden (nachfolgend mit "C" bezeichnet). Geeignete Kunststoffe hierfür sind beispielsweise Ethylen-Vinylalkohol-Copolymere, die gegebenenfalls teil- oder/und vollverseift sind ("EVOH"), und Vinylidenchlorid-Copolymere wie z.B. mit Vinylchlorid oder/und Methylacrylat als Comonomer ("PVDC"). Diesen Polymeren können auch Additive, wie Weichmacher, und/oder andere Polymere, wie Copolyamide oder/und lonomere beigemischt sein.

Auch die Schichten (B) und (C) sind üblicherweise von thermoplastischer Natur.

Zu berücksichtigen ist, dass Schichten entsprechend (A), (B) und (C) im Folienverbund z.T. nicht von selbst gut aneinander haften. Eine gute Haftung wird erzielt, indem zusätzlich mindestens eine Haftvermittlerschicht ("HV") als Zwischenschicht eingebracht wird, die bei der Folienherstellung z.B. durch Coextrusion Adhäsion zu beiden jeweils angrenzenden Schichten ausbildet. Geeignete Haftvermittler sind insbesondere Pfropf- oder/und lineare Copolymere, wobei diese Copolymere hier auch mehr als zwei Monomerarten enthalten können, mit Ethylen- oder/und Propylen-Einheiten sowie mit Bausteinen aus der Gruppe bestehend aus (Meth)Acrylsäure, (Meth)-Acrylsäureester, Vinylacetat und Maleinsäureanhydrid. Besonders bevorzugt sind u.a. Maleinsäureanhydrid-gepfropftes Polyethylen (LLDPE-g-MAA), Ethylen-Acryl-säureester-Copolymere sowie Ethylen-Vinylacetat-Copolymere (EVA). Die genannten Polymere können einzeln oder in Mischung in den HV-Schichten enthalten sein. Zusätzlich können die HV-Schichten noch weitere Polymere wie z.B. Polyethylen oder/und mindestens ein sonstiges Additiv oder/und mindestens ein Pigment enthalten.

Die HV-Schichten können auch weggelassen werden, wenn eine ausreichende Eigenhaftung zwischen den Funktionsschichten gegeben ist, wie sie beispielsweise oft zwischen Polyamid und manchem EVOH besteht oder indem man die Haftvermittlerkomponente in die Komponenten der angrenzenden Schicht (B) einmischt.

Die Unterschiede in Aufbau, Struktur oder/und Zusammensetzung zwischen den Schichten können gering oder deutlich ausgeprägt sein. Die Übergänge zwischen den einzelnen Schichten können jeweils unabhängig voneinander von Schichtgrenze zu Schichtgrenze deutlich oder schwach ausgeprägt oder fließend sein. Besonders bevorzugt ist, dass unter der Außenschicht (Z) mindestens eine Schicht mit mechanisch tragender Funktion besteht.

Die Außenschicht (Z) weist häufig eine Dicke im Bereich von 5 bis 80 µm auf, ihre Dicke kann jedoch in noch weiteren Bereichen variiert werden. Vorzugsweise wird die Poren- bzw. Blasenstruktur nur in der Außenschicht (Z) der coextrudierten thermoplastischen Nahrungsmittelhüllen oder in dieser und in der direkt angrenzenden Schicht ausgebildet. Falls dies in zwei Schichten erfolgt, kann die Dicke beider Schichten zusammen vorzugsweise im Bereich von 10 bis 120 µm variiert werden. Alle diese Dickenangaben verdeutlichen, welche großen Poren gegebenenfalls auch als geschlossene Poren in diesen Schichten eingeschlossen werden können. Wenn ein Teil dieser großen Poren dann einen offenen Zugang zur Oberfläche der Außenschicht (Z) aufweist, können grundsätzlich auch sehr große Poren ohne starke Änderung der Porenform in der Ebene dieser Oberfläche angeschnitten werden. Wenn jedoch solche Poren zusätzlich noch durch die Extrusionsbedingungen und durch die Zusammensetzung der Polymermasse texturiert und länglich ausgerichtet werden, kann die Größe der Poren darüber hinaus auch noch wesentlich vergrößert werden, d.h. gegebenenfalls bis in den Bereich von mehreren Millimetern.

Die Außenschicht (Z) lässt sich mit den anderen genannten Schicht-Typen zu unterschiedlichen Mehrschichtstrukturen kombinieren. Wesentlich ist immer, dass die Außenschicht (Z) an der äußeren Hüllenoberfläche angeordnet ist und dass darunter mindestens eine Schicht mit mechanisch tragender Funktion existiert. Bevorzugte Schichtstrukturen sind: (zu den Abkürzungen siehe weiter oben):

| Schlauchaußenseite: | Schlauchinnenseite |
|---|---|
| 1) | Z/A |
| 2) | Z/A/A |
| 3) | Z/A/B |
| 4) | Z/HV/A |
| 5) | Z/HV/C |
| 6) | Z/A/HV/A |
| 7) | Z/A/HV/C |
| 8) | Z/HV/A/HV |
| 9) | Z/HV/C/HV |
| 10) | Z/HV/A/HV/A |
| 11) | Z/A/HV/B/HV/A |
| 12) | Z/A/HV/C/HV/A |
| 13) | Z/HV/A/HV/B/HV/A |
| 14) | Z/HV/A/HV/C/HV/A |
| 15) | Z/B/A |
| 16) | Z/A/B/A |
| 17) | Z/A/C/A |
| 18) | Z/A/B/C |
| 19) | Z/A/C/B. |

Besonders bevorzugt sind Schichtabfolgen gemäß 4), 6), 12), 14), 15), 16), 17) und 19).

Die Herstellung der Nahrungsmittelhülle gemäß einer der beschriebenen Schichtabfolgen erfolgt durch Coextrusion und anschließendes Schlauchblasen oder durch biaxiale Schlauchstreckung. Entsprechende Verfahren sind dem Fachmann grundsätzlich geläufig.

Die zu verschäumende Polymerzusammensetzung wird vorzugsweise mit einem zuvor hergestellten Kunststoff-Füllstoff-Masterbatch vermengt und in dem Außenschicht-Extruder aufgeschmolzen.

Im Fall der physikalischen Verschäumung wird das komprimierte und gegebenenfalls verflüssigte Treibgas oder/und die insbesondere niedrig siedende Flüssigkeit, die das Treibgas freisetzen kann, unter Druck in die Polymerschmelze eingeleitet und darin gelöst.

Beim chemischen Verschäumen wird hingegen das Treibmittel bevorzugt als Treibmittel-Masterbatch auf Basis von Kunststoffgranulat, das gleichzeitig auch Nukleierungsmittel enthalten kann, dem zu verschäumenden Polymer bzw. dem zu verschäumenden Polymergemisch vor dem Einbringen in den Extruder zugesetzt, so dass sich das mindestens eine Treibmittel in der entstehenden Schmelze dispergiert. Vorzugsweise wird der polymeren Zusammensetzung vor der Verarbeitung Treibmittel in Form einer Flüssigkeit, eines Pulvers oder/und eines Masterbatch-Granulats zugegeben, wobei letzteres im wesentlichen aus im Polymergranulat eingebettetem Treibmittel bestehen kann. Durch das Lösen von Treibmittel, Treibgas oder/und Gas kann die Viskosität der Schmelze deutlich erniedrigt werden.

Die Schmelze wird anschließend auf eine Temperatur oberhalb der anfänglichen Zersetzungstemperatur des/der Treibmittel(s) erhitzt. Der Druck im Extruder sollte während der hohen, oft im Bereich von 150 bis 300 °C liegenden Temperaturen z.B. 80 oder 100 bar je nach Ausführung des Extruders und je nach den Extrusionsbedingungen nicht unterschreiten, um eine vorzeitige Expansion des Treibgases zu verhindern.

Vorzugsweise wird mindestens eine insbesondere niedrig siedende Flüssigkeit oder/und mindestens ein Treibgas im Extruder in der Polymerschmelze gelöst und bei der Druckentlastung bei oder nach dem Austritt aus der Extrusionsdüse in der flüssigen oder zähflüssigen Polymerschmelze als Gas in Form von Gasblasen freigesetzt, die in der Polymerschmelze beim Abkühlen als Poren zumindest teilweise eingefroren werden. Die Form, Größe oder/und Position dieser Gasblasen kann jedoch bis zum Einfrieren wechseln.

Beim Austritt von Gas bzw. Treibgas kann die Viskosität - gegebenenfalls schlagartig - deutlich erhöht werden. Da sich die Eigenschaften der Schmelze dann signifikant ändern, ist es vorteilhaft, durch konstruktive Auslegung der Werkzeuge und aller beteiligten Komponenten des Extruders dafür zu sorgen, dass einem vorzeitigen Druckabfall im Extruder entgegengewirkt wird.

Die weiteren vorgesehenen Polymere bzw. Gemische für die anderen Schichten werden parallel hierzu in separaten Extrudern aufgeschmolzen und plastifiziert. Anschließend werden die Zusammensetzungen aller Schichten in einer beheizten Coextrusions-Ringdüse zusammengeführt. Am Düsenaustritt kommt es zu einem rapiden Druckabfall, so dass das Treibgas expandiert und die austretende Kunststoffschmelze insbesondere der Außenschicht (Z) verschäumt werden kann. Der austretende ringförmige Schmelzefilm kann nun entweder direkt zu einem Folienschlauch aufgeblasen werden oder durch einen Streckprozess wie z.B. einen Biaxial-Streckprozeß mit gegebenenfalls nachgeschalteter Thermofixierung zugeführt werden. Bei letzterem Prozess wird der Schmelzefilm durch schnelles Abkühlen zu einem amorphen Vorschlauch verfestigt; dieser kann nach anschließendem Wiedererwärmen auf z.B. ca. 80 °C mittels eines zwischen zwei Quetschwalzenpaaren eingeschlossenen Luftpolsters biaxial verstreckt werden. Die anschließende Thermofixierung kann erfolgen, indem der verstreckte Schlauch durch eine weitere Heizzone, gegebenenfalls unter Stabilisierung mit einem zweiten Luftpolster, geführt wird. Auf diese Weise lässt sich die thermische Schrumpfneigung der Hülle auf praxisrelevante Werte im Bereich von ca. 5 bis 20 % verringern - nach 20 min Lagerung in 80 °C warmem Wasser in Längs- und Querrichtung gemessen. Vorzugsweise weist eine biaxial verstreckte Nahrungsmittelhülle einen Restschrumpf in Längs- und Querrichtung auf, der 6, 7, 8, 9, 10, 11, 12, 13, 14, 15, 16, 17, 18 oder 19 % beträgt. Vorzugsweise weist eine blasverformte Nahrungsmittelhülle einen Restschrumpf in Längs- und Querrichtung von weniger als 5 % auf, insbesondere 4, 3, 2 oder 1 %.

Die Oberflächenstruktur bzw. Porosität der erfindungsgemäßen Nahrungsmittelhüllen konnte insbesondere dadurch variiert werden, dass durch die Mengenvariation der jeweiligen Komponenten für die Zusammensetzung zur Herstellung der entsprechenden Schicht, beispielsweise der Außenschicht (Z), durch die Variation der Zahl der Komponenten, durch die Variation der chemischen Zusammensetzung der einzelnen Komponenten, gegebenenfalls durch die Variation des Zusatzes von mindestens einem Nukleierungsmittel, wobei auch hier Art und Menge variiert werden können, oder/und durch die Variation der Extrusionsbedingungen, wie Temperaturen, Drucke oder/und Geschwindigkeiten, insbesondere auch die Viskosität der Schmelze zum Zeitpunkt des Verschäumens und das Zeitverhalten bei der Poren- und Blasenbildung bzw. des Einfrierens der Poren und Blasen beeinflusst wird.

Die derart hergestellten Schläuche können danach zu einem einseitig abgebundenen Abschnitt, zu einer Raffraupe, zu einer naturdarmähnlichen Form, insbesondere zu einem Kranzdarm oder zu einem Fettende, weiterverarbeitet werden.

Die Glanzwerte der Oberflächen der Nahrungsmittelhüllen - gemessen nach DIN 67530, ISO 2813 und ASTM D 523 bei einem Einstrahlwinkel von 60 ° mit dem Gerät Micro Gloss 60 der Fa. BYK Gardner - sind in der Regel nicht größer als 30, vorzugsweise kleiner als 27, 25, 22 oder 20, besonders bevorzugt kleiner als 17, 14 oder 10, vor allem kleiner als 8, 6 oder 4. An weiteren erfindungsgemäßen Proben, die ausgeprägte Texturierungen sowie längliche Porenräume aufwiesen, wurden Glanzwerte von 14, 9, 8, 6, 5 und 3 ermittelt. Hierbei wurde das von der Oberfläche reflektierte Licht fotoelektrisch erfasst. Je kleiner die Glanzwerte sind, desto matter erscheint die Oberfläche.

Die Rauheitswerte wurden nach DIN 4762, DIN ISO 4287/1 und DIN 4762/1 E mit einem Perthometer S5P mit dem Perthen-Taster RHT6/50E 6110457 (Diamond) bei einem Cut-Off-Grad von 0,8 mm an Oberflächen der Außenschicht (Z) ermittelt.

Der Mittenrauhwert Rₐ dieser Oberflächen beträgt mindestens 1,5 µm, vorzugsweise mindestens 1,7 µm, 1,9 µm oder 2,1 µm, besonders bevorzugt mindestens 2,3 µm, 2,7 µm oder 3,1 µm, ganz besonders bevorzugt mindestens 3,5 µm, 3,8 µm oder 4,2 µm, vor allem mindestens 4,6 µm oder 5,2 µm. An weiteren erfindungsgemäßen Proben, die ausgeprägte Texturierungen sowie längliche Porenräume aufwiesen, wurden Mittenrauhwerte Rₐ von 1,6 µm, 2,3 µm, 2,8 µm, 3,4 µm, 3,6 µm, 4,2 µm, 4,4 µm, 4,8 µm, 4,9 µm, 5,4 µm, 5,5 µm, 6,3 µm, 7,0 µm, 7,2 µm, 7,8 µm, 8,3 µm, 8,5 µm, 8,8 µm, 9,3 µm, 9,7 µm, 10,2 µm und 10,9 µm ermittelt.

Die mittlere Rauhtiefe R_{z} dieser Oberflächen beträgt mindestens 5 µm, vorzugsweise mindestens 10 µm, 12 µm oder 14 µm, besonders bevorzugt mindestens 16 µm, 18 µm oder 20 µm, ganz besonders bevorzugt mindestens 22 µm, 24 µm oder 26 µm, vor allem mindestens 28 µm, 32 µm, 36 µm, 40 µm, 44 µm oder 48 µm. An weiteren erfindungsgemäßen Proben, die ausgeprägte Texturierungen sowie längliche Porenräume aufwiesen, wurden mittlere Rauhtiefen R_{z} von 10,6 µm, 11,0 µm, 14,1 µm, 15,2 µm, 15,9 µm, 16 µm, 17,8 µm, 19,8 µm, 20,7 µm, 23,9 µm, 28,7 µm, 33,0 µm, 37,4 µm, 44,9 µm, 47,1 µm, 48,5 µm, 51,2 µm, 55, µm, 58,9 µm und 63,1 µm ermittelt.

Die maximale Rauhtiefe Rₘₐₓ dieser Oberflächen beträgt mindestens 8 µm, vorzugsweise mindestens 10 µm, 13 µm oder 16 µm, besonders bevorzugt mindestens 19 µm, 22 µm oder 25 µm, ganz besonders bevorzugt mindestens 28 µm, 31 µm oder 34 µm, vor allem mindestens 37 µm, 40 µm, 43 µm, 46 µm oder 49 µm. An weiteren erfindungsgemäßen Proben, die ausgeprägte Texturierungen sowie längliche Porenräume aufwiesen, wurden maximale Rauhtiefen Rₘₐₓ von 14,5 µm, 14,9 µm, 17,1 µm, 19,2 µm, 22,9 µm, 24,3 µm, 26,5 µm, 27 µm, 29,6 µm, 31,3 µm, 33 µm, 36,7 µm, 39 µm, 40,9 µm, 42,5 µm, 47,3 µm, 49,2 µm, 53,2 µm, 56,4 µm, 59,3 µm, 61,2 µm, 64,8 µm, 66,7 µm, 69,1 µm, 73,1 µm, 77,3 µm, 81,2 µm und 84,9 µm ermittelt.

Bei der lichtmikroskopischen Vermessung von besonders großen Poren wurden an weiteren erfindungsgemäßen Proben, die ausgeprägte Texturierungen sowie längliche Porenräume aufwiesen, wurden die Durchmesser in der größten Längserstreckung und senkrecht dazu bestimmt. Hierbei wurden die längsten Porendurchmesser bei den Proben a) bis c) sogar mit Werten a) im Bereich von 1 bis 7,4 mm, b) im Bereich von 1,2 bis 4,5 mm bzw. c) im Bereich von 0,8 bis 3,2 mm ermittelt. Die Durchmesser senkrecht dazu lagen a) im Bereich von 0,5 bis 1,3 mm, b) im Bereich von 0,7 bis 1,2 mm bzw. c) im Bereich von 0,9 bis 1,1 mm.

Die in der Außenschicht (Z) der coextrudierten thermoplastischen Nahrungsmittelhüllen gebildete Poren- bzw. Blasenstruktur ist in dieser Form auch bei Nahrungsmittelhüllen aus Natur-, Hautfaser- oder/und faserverstärkten Cellulosedärmen äußerst ungewöhnlich. Mit dem erfindungsgemäßen Verfahren ist es möglich, den mit bloßem Auge wahrnehmbaren optischen Eindruck und den haptischen Eindruck von Natur-, Hautfaser- oder/und faserverstärkten Cellulosedärmen nachzuahmen, obwohl die Mikrostrukturen zwischen den erfindungsgemäßen Nahrungsmittelhüllen und solchen aus Natur-, Hautfaseroder/und faserverstärkten Cellulosedärmen signifikant unterschiedlich sind. Die Rauhigkeit der Außenfläche (Z) der erfindungsgemäßen Nahrungsmittelhüllen wird meistens in stärkerem Ausmaß durch Poren und Blasen bestimmt, während die der Natur-, Hautfaser- oder/und faserverstärkten Cellulosedärme oft vorwiegend durch Fasern oder/und Partikel bestimmt wird. Dennoch ist es überraschenderweise gelungen, den mit bloßem Auge wahrnehmbaren optischen Eindruck und den haptischen Eindruck von Natur-, Hautfaser- oder faserverstärkten Cellulosedärmen nachzuahmen.

Es war überraschend, dass es gelang, nicht nur den vergleichsweise stark glänzenden Cellulosedarm ohne Faserverstärkung, sondern auch den Natur-, Kollagen-, Hautfaser- oder/und faserverstärkten Cellulosedarm noch deutlich natürlicher aussehend herzustellen als bisher bekannt ist. Diese Hüllen sahen deutlich natürlicher aus als solche, die ohne wesentliche Beeinflussung der Poren- und Blasenbildung allein unter erhöhter Zugabe von vergleichsweise groben organischen oder/und anorganischen Partikeln bzw. Fasern gelungen ist. Der von den erfindungsgemäßen Nahrungsmittelhüllen vermittelte optische Eindruck ist üblicherweise viel matter und natürlicher als der von den eben genannten, vorwiegend nur vergleichsweise grobe Partikel enthaltenden Hüllen. Darüber hinaus ist es gelungen, Nahrungsmittelhüllen herzustellen, die noch einen deutlich matteren Eindruck aufweisen, als sie ein Natur-, Kollagen-, Hautfaser- oder/und faserverstärkter Cellulosedarm zeigt.

Die erfindungsgemäßen Nahrungsmittelhüllen haben darüber hinaus gegenüber solchen mit erhöhten Gehalten an harten, vergleichsweise gröberen Partikeln den Vorteil, dass sie nicht zu abrasiv sind und häufig einen samtartigen optischen Eindruck gewähren.

### Beispiele

### Beispiel 1

Mit Hilfe der Coextrusionstechnik wurde ein dreischichtiger Blasschlauch über drei Einschneckenextruder und über die nachgeschaltete Coextrusionsringdüse hergestellt mit
a) einer Innenschicht bestehend aus 80 Gew.-% PA6 (Grilon^{®} F34) und 20 Gew.-% PA6I/6T (Grivory^{®} G21),
b) einer Mittelschicht bestehend aus PA6 (Grilon^{®} F34) und
c) einer Außenschicht bestehend aus 72,5 Gew.-% Polyethylen (Exact^{®} 8201), 20 Gew.-% eines MSA-gepfropften LLDPE als Haftvermittler (Admer^{®} NF358E), 3,5 Gew.% Calciumcarbonat und 4 Gew.-% eines Treibmittel-Batches auf Basis von Zitronensäure, Calciumcarbonat und Polyethylenwachs (Hydrocerol^{®} CT 592).

Der Primärschlauch wurde schnell auf ca. 20 °C abgekühlt und anschließend erneut auf ca. 80 °C erwärmt. Bei dieser Temperatur wurde er biaxial bei einem Flächenstreckverhältnis von 9,25 verstreckt. In einer weiteren Heizzone wurde der Schlauch anschließend thermofixiert, so dass der thermische Schrumpf, gemessen in Wasser bei 80 °C, noch ca. 10 - 12 % betrug.

Die Gesamtwandstärke der Hülle betrug bei einem Durchmesser von 105 mm 60 µm. Die Innenschicht a) hatte daran einen mittleren Anteil von ca. 33 %, die Mittelschicht b) von ca. 33 % und die Außenschicht c) von ca. 33 %.

Dieser Hüllenaufbau entspricht dem oben beschriebenen Aufbau Z / A / A. Die Schicht c) entspricht der außen angeordneten, mit Treibmittel verschäumten Außenschicht (Z). Sie ist besonders rauh und liefert einen außerordentlich geringen Oberflächenglanz. Die Oberflächeneigenschaften des Schlauches sind in der Tabelle zusammengestellt.

### Beispiel 2

Mit Hilfe der Coextrusionstechnik wurde ein dreischichtiger Primärschlauch über drei Einschneckenextruder und eine nachgeschaltete Coextrusionsringdüse hergestellt mit
a) einer Innenschicht bestehend aus 80 Gew.-% PA6 (Grilon^{®} F34) und 20 Gew.-% PA6I/6T (Grivory^{®} G21),
b) einer Mittelschicht bestehend aus einem Haftvermittler auf Basis von MSAgepfropftem LLDPE (Modic^{®} AP L513) und
c) einer Außenschicht (Schicht (Z)) bestehend aus 46 Gew.-% Polyethylen (Escorene^{®} LD258), 46 Gew.-% Propylen-Copolymer (Eltek^{®} PKS309), 4 Gew.-% Calciumcarbonat und 4 Gew.-% eines Treibmittel-Batches auf Basis von Natriumhydrogencarbonat, Calciumcarbonat, Zitronensäure und Polyethylenwachs (Hydrocerol^{®} ITP 813).

Der Primärschlauch wurde schnell auf ca. 20 °C abgekühlt und anschließend auf ca. 80 °C erwärmt. Bei dieser Temperatur wurde er biaxial mit einem Flächenstreckverhältnis von 9,25 verstreckt. In einer weiteren Heizzone wurde der Schlauch anschließend thermofixiert, so dass der thermische Schrumpf ca. 10 - 12 % betrug - gemessen in Wasser bei 80 °C. Der Durchmesser des thermofixierten Schlauches betrug 108 mm bei einer Gesamtwandstärke von 60 µm. Dabei entfielen ca. 25 % auf die Innenschicht, ca. 35 % auf die Mittelschicht und ca. 40 % auf die Außenschicht. Dieser Hüllenaufbau entspricht dem oben beschriebenen Aufbau Z / HV / A.

### Beispiel 3

Wie in Beispiel 2 beschrieben wurde ein biaxial verstreckter thermofixierter dreischichtiger Schlauch mit einem Durchmesser von 108 mm bei einer Gesamtwandstärke von 60 µm hergestellt. Im Unterschied zum obigen Beispiel bestand die außen angeordnete Schicht c) aus 90 Gew.-% Propylen-Copolymer (Eltex^{®} PKS309), 6 Gew.-% Talkum und 4 Gew.-% eines Treibmittel-Batches auf Basis von Hydrocerol^{®} ITP 813. Auch hier zeichnete sich die außen angeordnete Schicht (Z) durch einen besonders geringen Oberflächenglanz aus - siehe Tabelle.

### Beispiel 4

Wie in Beispiel 2 beschrieben wurde ein biaxial verstreckter thermofixierter dreischichtiger Schlauch mit einem Durchmesser von 108 mm bei einer Gesamtwandstärke von 60 µm hergestellt. Im Unterschied zum oben beschriebenen Beispiel bestand die außen angeordnete Schicht c) aus 36 Gew.-% Polyethylen (Escorene^{®} LD258), 25 Gew.-% Bynel^{®} 4140, 35 Gew.-% Ultradur^{®} B4550 und 4 Gew.-% Treibmittel-Batch auf Basis von Hydrocerol^{®} ITP 813. Die außen angeordnete Schicht (Z) zeichnete sich durch einen besonders geringen Oberflächenglanz, durch eine extrem hohe Rauhigkeit und sehr große länglich verzogene Poren aus, die quer Durchmesser bis 1 mm und dabei längs oft Durchmesser von 1 bis 7 mm aufwiesen.

### Beispiel 5

Wie in Beispiel 2 beschrieben wurde ein biaxial verstreckter thermofixierter dreischichtiger Schlauch mit einem Durchmesser von 108 mm bei einer Gesamtwandstärke von 60 µm hergestellt. Im Unterschied zum oben beschriebenen Beispiel bestand die außen angeordnete Schicht c) aus 36 Gew.-% Polyethylen (Escorene^{®} LD258), 35 Gew.-% Ethylenvinylacetat (ELVAX^{®} 360), 25 Gew.-% Bynel^{®} 4140 und 4 Gew.-% Treibmittel-Batch auf Basis von Hydrocerol^{®} ITP 813. Die hier außen angeordnete Schicht Z zeichnet sich durch einen besonders geringen Oberflächenglanz, durch eine extrem hohe Rauhigkeit und sehr große länglich verzogene Poren aus, die quer Durchmesser bis 1 mm und dabei längs oft Durchmesser von 1 bis 3 mm aufwiesen.

### Beispiel 6

Wie in Beispiel 2 beschrieben wurde ein biaxial verstreckter thermofixierter dreischichtiger Schlauch mit einem Durchmesser von 108 mm bei einer Gesamtwandstärke von 60 µm hergestellt. Im Unterschied zum oben beschriebenen Beispiel bestand die außen angeordnete Schicht c) aus 50 Gew.-% Polyethylen (Escorene^{®} LD258), 42 Gew.-% Bynel^{®} 4140 und 8 Gew.-% Polystyrol der Firma Roth.

### Beispiel 7

Wie in Beispiel 2 beschrieben wurde ein biaxial verstreckter thermofixierter dreischichtiger Schlauch mit einem Durchmesser von 108 mm bei einer Gesamtwandstärke von 60 µm hergestellt. Im Unterschied zum oben beschriebenen Beispiel bestand die außen angeordnete Schicht c) aus 40 Gew.-% Polyethylen (Escorene^{®} LD258), 35 Gew.-% Ethylenvinylacetat (ELVAX^{®} 360) und 25 Gew.-% Bynel^{®} 4140.

### Beispiel 8

Wie in Beispiel 2 beschrieben wurde ein biaxial verstreckter thermofixierter dreischichtiger Schlauch mit einem Durchmesser von 108 mm bei einer Gesamtwandstärke von 60 µm hergestellt. Im Unterschied zum oben beschriebenen Beispiel bestand die außen angeordnete Schicht c) aus 80 Gew.-% Polyamid 6.66 (Ultramid^{®} C34), 15 Gew.-% Bynel^{®} 4140 und 5 Gew.-% Cellulosepulver (Jelucel^{®} PF 30).

### Vergleichsbeispiel 1 - nicht verschäumt

Mit Hilfe der Coextrusionstechnik wurde ein dreischichtiger Primärschlauch über drei Einschneckenextruder und eine nachgeschaltete Coextrusionsringdüse hergestellt mit:
a) einer Innenschicht bestehend aus 85 Gew.-% PA6 (Grilon^{®} F34) und 15 Gew.-% PA6I/6T (Grivory^{®} G21),
b) einer Mittelschicht bestehend aus 50 Gew.-% eines Polyethylen LDPE (Escorene^{®} LD165BW) vermischt mit 50 Gew.-% eines MSA-gepfropften LLDPE als Haftvermittler (Admer^{®} NF518E) und
c) einer Außenschicht bestehend aus 90 Gew.-% PA6 (Grilon^{®} F34) und 10 Gew.-% PA6I/6T (Grivory^{®} G21).

Der Primärschlauch wurde schnell auf ca. 20 °C abgekühlt und anschließend erneut auf ca. 80 °C erwärmt. Bei dieser Temperatur wurde er biaxial bei einem Flächenstreckverhältnis von 9,25 verstreckt. In einer weiteren Heizzone wurde der Schlauch anschließend thermofixiert, so dass der thermische Schrumpf in Wasser bei 80 °C gemessen noch ca. 10 - 12 % betrug. Die Gesamtwandstärke betrug hier 50 µm bei einem Durchmesser von 80 mm. Dabei betrug der Innenschichtanteil ca. 20 %, der Mittelschichtanteil ca. 40 % und der Außenschichtanteil ca. 40 %. Die Oberfläche war im Vergleich zu den beschriebenen erfindungsgemäßen Hüllen sehr glatt und glänzend wie die nachfolgende Tabelle zeigt.

### Messungen an Abschnitten der in den Beispielen hergestellten Hüllen:

Die Rauheitswerte wurden nach DIN 4762, DIN ISO 4287/1 und DIN 4762/1 E mit einem Perthometer S5P mit dem Perthen-Taster RHT6/50E 6110457 (Diamond) bei einem Cut-Off-Grad von 0,8 mm ermittelt. Der Mittenrauhwert Rₐ ist der arithmetische Mittelwert aller Abweichungen des Rauheitsprofils von der Mittellinie innerhalb der Gesamtmessstrecke. Die gemittelte Rauhtiefe R_{z} ist der Mittelwert aus den Einzelrauhtiefen fünf aufeinanderfolgender Einzelmessstrecken von je 5 mm Länge im Rauheitsprofil. Die maximale Rauhtiefe Rₘₐₓ ist die größte der fünf Einzelrauhtiefen. Die Rauheitswerte wurden jeweils über 5 Messungen gemittelt.

Die Glanzwerte wurden nach DIN 67530, ISO 2813 und ASTM D 523 bei einem Einstrahlungswinkel von 60° mit dem Gerät Micro Gloss 60 der Fa. BYK Gardner bestimmt. Dabei wurde das von der Oberfläche reflektierte Licht fotoelektrisch erfasst. Je kleiner die Glanzwerte sind, desto matter erscheint die Oberfläche.

Die Poren- und Blasengrößen wurden ohne Trennung von Poren und Blasen anhand von jeweils 5 rasterelektronenmikroskopischen Aufnahmen von zufällig ausgewählten Ausschnitten der Oberfläche der Außenschicht (Z) bestimmt. Als Blasen wurden dabei die großen porenähnlichen Formen, die mit einem kraterartigen Rand nur eine geringe Vertiefung zeigen, angesehen. Die Poren- bzw. Blasengrößenverteilung wurde anhand rasterelektronenmikroskopischer Aufnahmen der Oberfläche der Außenschicht (Z) in Aufsicht bestimmt. Für jede Pore bzw. Blase wurde ein mittlerer Durchmesser ermittelt. Bei allen drei erfindungsgemäßen Proben wurden jeweils 180 Poren bezüglich ihrer Größe ausgewertet. Je mm² Oberfläche wurden etwa 150 bis 210 Poren ermittelt. Hierzu wurden die ermittelten Porengrößen in jeweils 9 Größenklassen erfasst und anschließend Mittelwerte je Klasse berechnet (Tabelle 2). Anschließend wurden mit Hilfe dieser arithmetischen Mittelwerte für jede Probe die prozentuale Zahl der Poren bezogen auf die Gesamtzahl der vermessenen Poren pro mm² ermittelt, die jeweils kleiner als 10 µm usw. waren (Tabelle 3). Aus der logarithmischen Auftragung der Summenhäufigkeitsverteilungen ließen sich die Anteile der Verteilungskurven bei d₅₀ und d₉₈ ermitteln. Die Werte bei d₉₈ charakterisieren die größten Poren bzw. Blasen.

Die erfindungsgemäßen Hüllen sahen insbesondere einem Kollagendarm, Naturdarm bzw. Faserdarm außer in der Farbe sehr ähnlich.

Die Tabelle. 1 zeigt, wie deutlich sich die erfindungsgemäßen Nahrungsmittelhüllen, die nach den oben beschriebenen Verfahren hergestellt wurden, aufgrund der mit einem Treibmittel verschäumten Außenschicht (Z) von nicht verschäumten Hüllen hinsichtlich ihrer Oberflächeneigenschaften unterscheiden. Daneben werden in der Tabelle 1 auch typische Messwerte von Naturdarm-, Kollagen- und faserverstärkten Cellulosehüllen angegeben.

**Tabelle 1: Beispiele und Vergleichsbeispiel (VB)**

| **Beispiele** | **Außenschicht (Z)** | **Schichtdicke** von (Z) [µm] | **Rauhigkeit [µm]** | | | **Glanz 60°** | **Mittlere Porengröße d₅₀ [µm]** | **vergleichbar mit** |
|---|---|---|---|---|---|---|---|---|
| | | | Rₐ | R_{z} | Rmax | | | |
| **1** | PE/CaCO₃/HV/Treibmittel | 14 | 3,1 | 18,3 | 23,4 | 3 | 85 | Kollagend. |
| **2** | PE/PP*l*CaCO₃/Treibmittel | 14 | 4,5 | 24,7 | 29,5 | 2 | 40 | Kollagend. |
| **3** | PP/Talkum/Treibmittel | 24 | 3,5 | 20,6 | 25,1 | 4 | 25 | Kollagend. |
| **4** | PE/PBT/HV/Treibmittel | 20 | 10,1 | 61,2 | 81,1 | 6 | 2112 | --- |
| **5** | PE/EVA/HV/Treibmittel | 21 | 7,9 | 48,1 | 65,4 | 14 | 1314 | --- |
| **6** | PE/PS/HV | 19 | 1,2 | 6,3 | 8,0 | 8 | 22 | Naturdarm |
| **7** | PE/EVA/HV | 22 | 1,5 | 7,1 | 9,1 | 12 | 31 | Naturdarm |
| **8** | PA/HV/Cellulose | 15 | 2,8 | 12,1 | 14,5 | 18 | 152 | Faserdarm |
| **VB 1** | PA6/PA6I/6T, nicht verschäumt | 20 | 0,5 | 3,6 | 4,8 | 82 | --- | --- |
| **"Vorbild 1"** | Faserverstärkter Cellulosedarm | --- | 2,0 | 9,6 | 12,6 | 15 | --- | --- |
| **"Vorbild 2"** | Kollagendarm | --- | 2,2 | 10,0 | 15,0 | 5 | --- | --- |
| **"Vorbild 3"** | Naturdarm | --- | 1,7 | 8,6 | 11,8 | 10 | --- | --- |

**Tabelle 2: Blasen- und Porengrößenverteilung ermittelt an REM-Aufnahmen (absolut)**

| BeiSpiele | REM-Aufnahme Nr. | Blasen- und Porengrößenverteilung (absolut) | | | | | | | | | Zahl der vermessenen Poren |
|---|---|---|---|---|---|---|---|---|---|---|---|
| | | 1-10 µm | 11 - 25 µm | 26 - 40 µm | 41 - 55 µm | 56-70 µm | 71-85 µm | 86 - 100 µm | 101-115 µm | 116-130 µm | |
| **1** | **1** | 70 | 55 | 35 | 10 | 4 | 3 | 2 | 1 | 0 | 180 |
| | **2** | 74 | 54 | 38 | 11 | 5 | 4 | 2 | 2 | 0 | |
| | **3** | 76 | 55 | 30 | 12 | 3 | 2 | 2 | 0 | 0 | |
| | **4** | 66 | 56 | 40 | 9 | 3 | 3 | 1 | 1 | 0 | |
| | **5** | 64 | 55 | 32 | 8 | 5 | 3 | 3 | 1 | 0 | |
| | **Σ : 5** | **70** | **55** | **35** | **10** | **4** | **3** | **2** | **1** | **0** | |
| 2 | **1** | 19 | 30 | 50 | 33 | 25 | 11 | 4 | 2 | 2 | 180 |
| | **2** | 20 | 34 | 55 | 35 | 20 | 13 | 4 | 3 | 1 | |
| | **3** | 21 | 38 | 49 | 31 | 26 | 7 | 5 | 4 | 1 | |
| | **4** | 23 | 35 | 54 | 33 | 21 | 10 | 3 | 2 | 0 | |
| | **5** | 17 | 33 | 52 | 33 | 23 | 9 | 4 | 4 | 1 | |
| | **Σ : 5** | **20** | **34** | **52** | **33** | **23** | **10** | **4** | **3** | **1** | |
| **3** | **1** | 10 | 10 | 15 | 18 | 34 | 36 | 27 | 19 | 10 | 180 |
| | **2** | 9 | 12 | 16 | 16 | 35 | 37 | 27 | 17 | 11 | |
| | **3** | 8 | 11 | 14 | 17 | 33 | 38 | 28 | 15 | 13 | |
| | **4** | 7 | 9 | 15 | 19 | 34 | 37 | 26 | 18 | 14 | |
| | **5** | 11 | 13 | 15 | 20 | 34 | 37 | 27 | 16 | 12 | |
| | **Σ : 5** | **9** | **11** | **15** | **18** | **34** | **37** | **27** | **17** | **12** | |

**Tabelle 3: Blasen- und Porengrößenverteilung ermittelt an REM-Aufnahmen (Summenhäufigkeitsverteilung)**

| **Beispiele** | Blasen- und Porengrößenverteilung ermittelt an REM-Aufnahmen (prozentual) | | | | | | | | | **d₅₀ %** | **d₉₈ %** |
|---|---|---|---|---|---|---|---|---|---|---|---|
| | **< 10 µm [%]** | **< 25 µm [%]** | **< 40 µm [%]** | **< 55 µm [%]** | **< 70 µm [%]** | **< 85 µm [%]** | **< 100 µm [%]** | **< 115 µm [%]** | **< 130 µm [%]** | **[µm]** | **[µm]** |
| **1** | 39 | 69 | 89 | 94 | 97 | 98 | 99 | 100 | 100 | 15 | 90 |
| **2** | 11 | 30 | 59 | 77 | 90 | 96 | 98 | 99 | 100 | 36 | 101 |
| **3** | 5 | 11 | 19 | 29 | 48 | 69 | 84 | 93 | 100 | 70 | 103 |

## Patentansprüche

1. Coextrudierte thermoplastische Nahrungsmittelhülle aufgebaut aus mindestens zwei Schichten einschließlich einer Außenschicht (Z), **dadurch gekennzeichnet, dass** zumindest die Außenschicht (Z) eine Porosität von mindestens 5 Vol.-% aufweist, gemessen an Blasen bzw. Poren im wesentlichen in der Ebene der Oberfläche und dass die Oberfläche der Außenschicht (Z) eine offenporige oder/und kraterartige Oberflächenstruktur, eine gemittelte Rauhtiefe R_{z} von mindestens 5,0 µm und einen Glanzwert, gemessen bei einem Einstrahlwinkel von 60°, von nicht mehr als 30 aufweist.

2. Nahrungsmittelhülle nach Anspruch 1, **dadurch gekennzeichnet, dass** im obersten Bereich der Außenschicht (Z) oder/und an ihrer Oberfläche flache Blasen, eingewölbte Blasen oder/und Poren mit kraterartig hervortretenden Rändern auftreten.

3. Nahrungsmittelhülle nach Anspruch 1 oder 2, **dadurch gekennzeichnet, dass** Poren vorhanden sind, die sich zwischen faserbündelartig extrudierten Bereichen der thermoplastischen Außenschicht (Z) oder/und zwischen in ihr eingelagerten Fasern befinden, wobei die Fasern gegebenenfalls in die Kunstharzmasse teilweise oder vollständig eingebettet sind.

4. Nahrungsmittelhülle nach einem der vorstehenden Ansprüche, **dadurch gekennzeichnet, dass** die Poren bzw. Blasen in mindestens zwei verschiedenen Porengrößenverteilungen vorliegen.

5. Nahrungsmittelhülle nach einem der vorstehenden Ansprüche, **dadurch gekennzeichnet, dass** die offenporige oder/und kraterartige Oberflächenstruktur aus den bei der Extrusion durch Texturierung geformten Poren gebildet ist, die sich zwischen im wesentlichen faserbündelartig extrudierten Bereichen der thermoplastischen Außenschicht (Z) oder/und zwischen in ihr eingelagerten Fasern befindet.

6. Nahrungsmittelhülle nach einem der vorstehenden Ansprüche, **dadurch gekennzeichnet, dass** sie biaxial verstreckt ist und einen Restschrumpf in Längs- und Querrichtung aufweist, gemessen nach 20 min Lagerung in 80 °C warmem Wasser.

7. Nahrungsmittelhülle nach einem der vorstehenden Ansprüche, **dadurch gekennzeichnet, dass** sie blasverformt ist und einen Restschrumpf in Längs- und Querrichtung von weniger als 5 % aufweist, gemessen nach 20 min Lagerung in 80 °C warmem Wasser.

8. Verfahren zur Herstellung einer mindestens zweischichtigen, coextrudierten thermoplastischen Nahrungsmittelhülle nach einem der vorstehenden Ansprüche, **dadurch gekennzeichnet, dass** der Zusammensetzung vor der Extrusion mindestens ein Treibmittel oder/und mindestens ein Treibgas zugesetzt wird oder/und die Zusammensetzung so gewählt wird, dass in der Kunststoffmasse durch chemische Reaktionen zwischen ihren Komponenten mindestens ein Gas gebildet wird, so dass das Treibmittel, Gas bzw. Treibgas im Extruder unter hohem Druck und bei hoher Temperatur in der weitgehend oder vollständig geschmolzenen Kunststoffmasse verteilt wird, wobei gegebenenfalls vom Treibmittel Treibgas freigesetzt wird, wobei die Schmelze bei Druckentlastung beim oder/und nach dem Austritt aus dem Extruder verschäumt wird, indem zumindest ein Teil des Gases/der Gase Poren bzw. Blasen bildet, die in der erstarrenden Schmelze bzw. an ihrer Oberfläche zumindest teilweise erhalten bleiben.

9. Verfahren zur Herstellung einer mindestens zweischichtigen, coextrudierten thermoplastischen Nahrungsmittelhülle nach einem der Ansprüche 1 bis 7, **dadurch gekennzeichnet, dass** die Kunststoffkomponenten für die Außenschicht (Z) und gegebenenfalls auch für mindestens eine weitere Schicht der polymeren Zusammensetzung vor der Extrusion so ausgewählt werden, dass mindestens zwei Kunststoffkomponenten eingesetzt werden, die deutlich unterschiedliche Eigenschaften aufweisen und sich untereinander schlecht verbinden, so dass an den Grenzflächen zwischen diesen Komponenten Poren oder/und Blasen entstehen, die in der erstarrenden Schmelze bzw. an ihrer Oberfläche zumindest teilweise erhalten bleiben.

10. Verfahren nach Anspruch 8, **dadurch gekennzeichnet, dass** Poren oder/und Blasen am Ende des Extrusionsprozesses durch chemisches oder/und physikalisches Verschäumen gebildet werden.

11. Verfahren nach Anspruch 9, **dadurch gekennzeichnet, dass** mindestens eine insbesondere niedrig siedende Flüssigkeit oder/und mindestens ein Treibgas im Extruder in der Polymerschmelze gelöst werden und dass bei der Druckentlastung bei oder nach dem Austritt aus der Extrusionsdüse in der flüssigen oder zähflüssigen Polymerschmelze Gas in Form von Gasblasen freigesetzt wird, die in der Polymerschmelze beim Abkühlen als Poren zumindest teilweise eingefroren werden.

12. Verfahren nach Anspruch 8, 10 oder 11 **dadurch gekennzeichnet, dass** der polymeren Zusammensetzung vor der Verarbeitung Treibmittel in Form einer Flüssigkeit, eines Pulvers oder/und eines Masterbatch-Granulats zugegeben wird, wobei letzteres im wesentlichen aus im Polymergranulat eingebettetem Treibmittel besteht.

13. Verfahren nach einem der Ansprüche 8 bis 12, **dadurch gekennzeichnet, dass** der Schlauch anschließend zu einem einseitig abgebundenen Abschnitt, zu einer Raffraupe, zu einer naturdarmähnlichen Form, insbesondere zu einem Kranzdarm oder zu einem Fettende, weiterverarbeitet wird.

14. Verwendung der Nahrungsmittelhülle nach einem der Ansprüche 1 bis 7 als Lebensmittelverpackung, insbesondere für ein Milchprodukt oder für eine Wurstware, vorzugsweise als künstliche Wursthülle.

## Claims

1. A coextruded thermoplastic food casing composed of at least two layers inclusive of an external layer (Z), wherein at least the external layer (Z) has a porosity of at least 5 % by volume, measured on bubbles and, respectively, pores in essence in the plane of the surface and wherein the surface of the external layer (Z) has an open-pored or/and crater-type surface structure, an average roughness depth R_{z} of at least 5.0 µm, and a glass value of no more than 30, measured at an angle of incidence of 60 °.

2. The food casing as claimed in Claim 1, wherein in the uppermost region of the external layer (Z) or/and at the surface thereof there are flat bubbles, curved-top bubbles or/and pores with crater-type protruding edges.

3. The food casing as claimed in Claim 1 or 2, wherein pores are present situated between regions of the thermoplastic external layer (Z) that have been extruded in the manner of a fiber bundle or/and situated between fibers embedded in said external layer, where the fibers have optionally been embedded to some extent or completely into the synthetic resin composition.

4. The food casing as claimed in any of the preceding claims, wherein the pores and, respectively, bubbles are present in at least two different pore size distributions.

5. The food casing as claimed in any of the preceding claims, wherein the open-pored or/and crater-type surface structure has been formed from the pores formed via texturing during the extrusion process, situated between regions of the thermoplastic external layer (Z) that have been extruded in essence in the manner of a fiber bundle or/and situated between fibers embedded in said external layer.

6. The food casing as claimed in any of the preceding claims, which has been biaxially oriented and has a residual shrinkage longitudinally and transversely, measured after 20 min in water at 80 °C.

7. The food casing as claimed in any of the preceding claims, which has been shaped by blowing and has a residual shrinkage longitudinally and transversely of less than 5 %, measured after 20 min in water at 80 °C.

8. A process for the production of an at least two-layer, coextruded thermoplastic food casing as claimed in any of the preceding claims, which comprises adding, to the composition before the extrusion process, at least one blowing agent or/and at least one blowing gas, or/and the composition selecting in such a way that a gas is formed in the plastics composition via chemical reactions between components thereof, in such a way that the blowing agent, blowing gas or other gas is distributed in the substantially or completely molten plastics composition in the extruder under high pressure and at high temperature, where blowing gas is optionally liberated from the blowing agent, where the melt is foamed on depressurization on or/and after discharge from the extruder, in that at least a portion of the gas(es) forms pores or bubbles which at least to some extent remain in the solidifying melt or at the surface thereof.

9. A process for the production of an at least two-layer, coextruded thermoplastic food casing as claimed in any of claims 1 to 7, which comprises selecting the plastics components for the external layer (Z) and optionally also for at least one other layer of the polymeric composition before the extrusion process in such a way that at least two plastics components are used which have markedly different properties and which bond poorly to one another, so that pores and/or bubbles are produced at the interfaces between said components, and at least to some extent remain in the solidifying melt or at the surface thereof.

10. The process as claimed in Claim 8, wherein pores or/and bubbles are formed at the end of the extrusion process via chemical or/and physical foaming.

11. The process as claimed in Claim 9, wherein at least one in particular low-boiling-point liquid or/and at least one blowing gas are dissolved in the polymer melt in the extruder, and wherein on depressurization on or after discharge from the extruder die gas in the form of gas bubbles is liberated in the low- or high-viscosity polymer melt, and on cooling said bubbles are at least to some extent frozen in the form of pores in the polymer melt.

12. The process as claimed in Claim 8, 10, or 11, wherein blowing agent in the form of a liquid, of a powder, or/and of a granulated masterbatch is added to the polymeric composition before processing, where the latter essentially consists of blowing agent embedded in the granulated polymer.

13. The process as claimed in any of claims 8 to 12, wherein the flexible tube is then further processed to give a section tied off at one end, or to give a shirred stick, or to give a product similar to a natural skin, in particular to give a curved casing, or to give the product known as a fat end.

14. The use of the food casing as claimed in any of claims 1 to 7 as food packaging, in particular for a milk product, or for a sausage product, preferably as synthetic sausage casing.

## Revendications

1. Enveloppe pour produits alimentaires thermoplastique co-extrudée, constituée d'au moins deux couches comprenant une couche extérieure (Z), **caractérisée en ce qu'**au moins la couche extérieure (Z) présente une porosité d'au moins 5 % en volume, mesurée aux bulles ou pores essentiellement dans le plan de la surface et **en ce que** la surface de la couche extérieure (Z) présente une structure superficielle à pores ouverts et/ou de type cratères, une profondeur moyenne de rugosité R_{z} d'au moins 5,0 µm et un brillant, mesuré à un angle d'incidence de 60°, non supérieur à 30.

2. Enveloppe pour produits alimentaires selon la revendication 1, **caractérisée en ce que**, dans la zone supérieure de la couche extérieure (Z) et/ou sur leur surface se trouvent des bulles plates, des bulles incurvées et/ou des pores comportant des bords proéminants de type cratères.

3. Enveloppe pour produits alimentaires selon la revendication 1 ou 2, **caractérisée en ce que** des pores sont présents, lesquels se trouvent entre des zones extrudées de type faisceaux de fibres de la couche externe thermoplastique (Z) et/ou entre des fibres intégrées en elle, dans laquelle les fibres sont englobées éventuellement en partie ou complètement dans la masse de résine synthétique.

4. Enveloppe pour produits alimentaires selon l'une des revendications précédentes, **caractérisée en ce que** les pores ou les bulles se présentent en au moins deux répartitions de tailles de pores différentes.

5. Enveloppe pour produits alimentaires selon l'une des revendications précédentes, **caractérisée en ce que** la structure superficielle à pores ouverts et/ou de type cratères est formée à partir des pores formés lors de l'extrusion par texturage, qui se trouvent entre les zones extrudées essentiellement de type faisceaux de fibres de la couche extérieure thermoplastique (Z) et/ou dans les fibres intégrées dans celle-ci.

6. Enveloppe pour produits alimentaires selon l'une des revendications précédentes, **caractérisée en ce qu'**elle s'étire biaxialement et présente un retrait résiduel dans le sens longitudinal et perpendiculaire, mesuré après 20 min de stockage dans de l'eau chaude à 80° C.

7. Enveloppe pour produits alimentaires selon l'une des revendications précédentes, **caractérisée en ce qu'**elle est formée par soufflage et présente un retrait résiduel dans le sens longitudinal et perpendiculaire de moins de 5 %, mesuré après 20 min de stockage dans de l'eau chaude à 80° C.

8. Procédé de production d'une enveloppe pour produits alimentaires thermoplastique co-extrudée à au moins deux couches selon l'une des revendications précédentes, **caractérisé en ce que** l'on ajoute à la composition avant l'extrusion, au moins un agent propulseur et/ou au moins un gaz propulseur et/ou la composition est choisie de telle sorte que dans la masse de matière plastique, au moins un gaz est formé par réactions chimiques entre leurs composants, de sorte que l'agent propulseur, le gaz ou le gaz propulseur est réparti dans l'extrudeuse sous pression élevée et à température élevée dans la masse de matière plastique fondue largement ou complètement, dans lequel du gaz propulseur est éventuellement libéré de l'agent propulseur, dans lequel la masse fondue est expansée par décompression lors de et/ou après la sortie de l'extrudeuse en formant au moins une partie du gaz/des pores ou des bulles de gaz qui restent conservés au moins partiellement dans la masse fondue figée ou à sa surface.

9. Procédé de production d'une enveloppe pour produits alimentaires thermoplastique co-extrudée à au moins deux couches selon l'une des revendications 1 à 7, **caractérisé en ce que** les composants de matière plastique pour la couche extérieure (Z) et éventuellement également pour au moins une autre couche de la composition de polymère avant l'extrusion sont choisis de sorte qu'au moins deux composants de matière plastique sont utilisés, lesquels présentent des propriétés nettement différentes et se lient mal les uns aux autres, de telle sorte que sur les surfaces intermédiaires entre ces composants sont formés des pores et/ou des bulles qui restent contenus au moins partiellement dans la masse figée ou à sa surface.

10. Procédé selon la revendication 8, **caractérisé en ce que** des pores et/ou des bulles sont formés à la fin du processus d'extrusion par expansion chimique et/ou physique.

11. Procédé selon la revendication 9, **caractérisé en ce qu'**au moins un liquide en particulier à point d'ébullition inférieur et/ou au moins un gaz propulseur est dissous dans l'extrudeuse dans la masse de polymère et **en ce que** lors de la décompression, lors de la sortie ou après la sortie de la buse d'extrusion, dans la masse de polymère liquide ou visqueuse, du gaz sous la forme de bulles de gaz est libéré, lesquelles sont congelées au moins partiellement dans la masse de polymère lors du refroidissement, sous forme de pores.

12. Procédé selon la revendication 8, 10 ou 11, **caractérisé en ce que** l'on ajoute à la composition polymère, avant la transformation, un agent propulseur sous la forme d'un liquide, d'une poudre et/ou d'un granulé de mélange maître, ce dernier consistant essentiellement en agent propulseur englobé dans le granulé de polymère.

13. Procédé selon les revendications 8 à 12, **caractérisé en ce que** le tube est ensuite transformé en un segment qui est lié d'un seul côté, en une enveloppe plissée, en une forme similaire au boyau naturel, en particulier des boyaux courbes ou pour des denrées grasses.

14. Utilisation de l'enveloppe pour produits alimentaires selon l'une des revendications 1 à 7, comme emballage de produits alimentaires, en particulier pour un produit laitier ou une saucisse, de préférence en tant qu'enveloppe de saucisse synthétique.
